# EUROPEAN PATENT APPLICATION

(11) **EP 4 131 057 A1**
(43) Date of publication of application: **08.02.2023**
(21) Application number: 21775567.7
(22) Date of filing: 25.02.2021
(51) Int. Cl.: G06F 40/279, G06F 40/56, G06F 40/58

(54) **INFORMATION PROCESSING DEVICE AND INFORMATION PROCESSING METHOD**

(30) Priority: 25.03.2020 JP 2020055120
(71) Applicant: Sony Group Corporation, Tokyo 108-0075 (JP)
(72) Inventor: IWASE, Hiro, Tokyo 108-0075 (JP); TAKI, Yuhei, Tokyo 108-0075 (JP); SAWAI, Kunihito, Tokyo 108-0075 (JP)
(74) Representative: 2SPL Patentanwälte PartG mbB
(86) International application number: PCT/JP2021/006976
(87) International publication number: WO 2021/192794

(57) **Abstract**

An information processing apparatus includes a first detection unit (13da) that detects an unknown word that is an unknown phrase from text input in a natural language, a second detection unit (13dc) that detects occurrence of an event related to a known phrase included in the above text, and an association unit (13dd) that associates, with the above unknown word, each of an observation context (Cₒ) indicating a situation at the time of detection of the unknown word as a condition context (Cᵣ) and an observation context (Cₒ) indicating a situation at the time of the occurrence of the above event as a target context (Ct).

## Description

### TECHNICAL FIELD

The present disclosure relates to an information processing apparatus and an information processing method.

### BACKGROUND ART

In the related art, an information processing apparatus that executes various types of information processing according to speech content of a user via an interactive voice user interface (UI) is known. In such an information processing apparatus, for example, an "intent" indicating the intention of a user and an "entity" serving as a parameter of an operation corresponding to the intent are estimated from the speech content of the user through a natural language understanding (NLU) process, and information processing is executed on the basis of the estimation result.

Note that, if the speech content of the user includes an unknown phrase (hereinafter, referred to as an "unknown word"), it is not possible to estimate the intent or the entity. Thus, in the development/design process of such an information processing apparatus, learning work of associating a linguistic phrase with a real target, such as entity registration of NLU and addition of tag information to an image, map coordinates, or the like, is manually performed, for example.

However, as a matter of course, there are a large number of linguistic phrases, and the linguistic phrases always change over time. Therefore, in the manual learning work as described above, enormous cost is required, and there is a limit to following a change in a phrase.

Therefore, there has been proposed an information processing apparatus that has a learning mode for learning an unknown word on the basis of speech content of a user and an execution mode for executing various types of information processing corresponding to the learned unknown word, and improves learning efficiency by causing the user himself/herself to perform learning work (refer to, for example, Patent Document 1.).

### CITATION LIST

### PATENT DOCUMENT

Patent Document 1: International Publication No. WO 2009/028647

### SUMMARY OF THE INVENTION

### PROBLEMS TO BE SOLVED BY THE INVENTION

However, the above-described related art has room for further improvement in efficiently associating an unknown word with a real target without imposing a load on a user.

Specifically, in a case where the above-described related art is used, the user needs to explicitly switch between the learning mode and the execution mode to learn or execute the speech. Thus, the load is high for the user, and the learning efficiency is also low.

Therefore, the present disclosure proposes an information processing apparatus and an information processing method capable of efficiently associating an unknown word with a real target without imposing a load on a user.

### SOLUTIONS TO PROBLEMS

According to the present disclosure, there is provided an information processing apparatus including a first detection unit that detects an unknown word that is an unknown phrase from text input in a natural language; a second detection unit that detects occurrence of an event related to a known phrase included in the text; and an association unit that associates, with the unknown word, each of an observation context indicating a situation at the time of detection of the unknown word as a condition context and an observation context indicating a situation at the time of the occurrence of the event as a target context.

Furthermore, according to the present disclosure, there is provided an information processing apparatus including a first detection unit that detects an unknown word that is an unknown phrase from text input in a natural language; a second detection unit that detects occurrence of an event related to a known phrase included in the text; an association unit that associates, with the unknown word, each of an observation context indicating a situation at the time of detection of the unknown word as a condition context and an observation context indicating a situation at the time of the occurrence of the event as a target context; and an instruction unit that, in a case where the known phrase is included in new text and the condition context associated with the unknown word is observed, gives an instruction for generating a response using the unknown word.

Furthermore, according to the present disclosure, there is provided an information processing method including detecting an unknown word that is an unknown phrase from text input in a natural language; detecting occurrence of an event related to a known phrase included in the text; and associating, with the unknown word, each of an observation context indicating a situation at the time of detection of the unknown word as a condition context and an observation context indicating a situation at the time of the occurrence of the event as a target context.

Furthermore, according to the present disclosure, there is provided an information processing method including detecting an unknown word that is an unknown phrase from text input in a natural language; detecting occurrence of an event related to a known phrase included in the text; associating, with the unknown word, each of an observation context indicating a situation at the time of detection of the unknown word as a condition context and an observation context indicating a situation at the time of the occurrence of the event as a target context; and in a case where the known phrase is included in new text and the condition context associated with the unknown word is observed, giving an instruction for generating a response using the unknown word.

### BRIEF DESCRIPTION OF DRAWINGS

Fig. 1 is a schematic explanatory diagram (part 1) of an information processing method according to an embodiment of the present disclosure.
Fig. 2 is a schematic explanatory diagram (part 2) of the information processing method according to the embodiment of the present disclosure.
Fig. 3 is an explanatory diagram of terms.
Fig. 4 is a diagram illustrating a configuration example of an information processing system according to an embodiment of the present disclosure.
Fig. 5 is a block diagram illustrating a configuration example of an information processing apparatus according to an embodiment of the present disclosure.
Fig. 6 is a block diagram illustrating a configuration example of a sensor unit.
Fig. 7 is a block diagram illustrating a configuration example of an execution interaction control unit.
Fig. 8 is an explanatory diagram of unknown word information.
Fig. 9 is a processing explanatory diagram (part 1) in a case of human-directed speech.
Fig. 10 is a processing explanatory diagram (part 2) in the case of human-directed speech.
Fig. 11 is a processing explanatory diagram (part 3) in the case of human-directed speech.
Fig. 12 is a processing explanatory diagram (part 4) in the case of human-directed speech.
Fig. 13 is a processing explanatory diagram (part 5) in the case of human-directed speech.
Fig. 14 is a processing explanatory diagram (part 6) in the case of human-directed speech.
Fig. 15 is a processing explanatory diagram (part 7) in the case of human-directed speech.
Fig. 16 is a processing explanatory diagram (part 8) in the case of human-directed speech.
Fig. 17 is a flowchart illustrating a processing procedure in the case of human-directed speech.
Fig. 18 is an explanatory diagram of unknown word information according to a modification example.
Fig. 19 is a processing explanatory diagram (part 1) in a case of system-directed speech.
Fig. 20 is a processing explanatory diagram (part 2) in the case of system-directed speech.
Fig. 21 is a processing explanatory diagram (part 3) in the case of system-directed speech.
Fig. 22 is a flowchart illustrating a processing procedure in the case of system-directed speech.
Fig. 23 is a block diagram illustrating a configuration example of a server apparatus according to an embodiment of the present disclosure.
Fig. 24 is an explanatory diagram of a determination process executed by a determination unit.
Fig. 25 is a diagram (part 1) illustrating an interaction processing example of storing or discarding association.
Fig. 26 is a diagram (part 2) illustrating the interaction processing example of storing or discarding association.
Fig. 27 is a diagram (part 1) illustrating an application example of automatic update using an area of an image recognizer.
Fig. 28 is a diagram (part 2) illustrating the application example of automatic update using an area of the image recognizer.
Fig. 29 is a hardware configuration diagram illustrating an example of a computer that realizes functions of an information processing apparatus.

### MODE FOR CARRYING OUT THE INVENTION

Hereinafter, embodiments of the present disclosure will be described in detail with reference to the drawings. Note that, in each of the following embodiments, the same parts are denoted by the same reference numerals, and redundant description will be omitted.

Furthermore, in the present specification and the drawings, a plurality of constituents having substantially the same functional configuration may be distinguished by attaching different hyphenated numerals after the same reference numerals. For example, a plurality of configurations having substantially the same functional configuration is distinguished as an information processing apparatus 10-1 and an information processing apparatus 10-2 as necessary. However, in a case where it is not particularly necessary to distinguish each of a plurality of constituents having substantially the same functional configuration, only the same reference numeral is attached. For example, in a case where it is not necessary to particularly distinguish the information processing apparatus 10-1 and the information processing apparatus 10-2, they will be simply referred to as an information processing apparatus 10.

Furthermore, the present disclosure will be described according to the following item order.
1. Outline
1-1. Problems in comparative example of present embodiment
1-2. Outline of present embodiment
2. Configuration of information processing system
2-1. Overall configuration
2-2. Configuration of information processing apparatus
2-3. Configuration of execution interaction control unit
2-4. Specific example of processing details (in case of human-directed speech)
2-5. Specific example of processing details (in case of system-directed speech)
2-6. Configuration of server apparatus
2-7. Application example of automatic update using area of image recognizer
3. Modification examples
3-1. Modification example in case of human-directed speech
3-2. Modification example in case of system-directed speech
3-3. Other modification examples
4. Hardware Configuration
5. Conclusion

### <<1. Outline>>

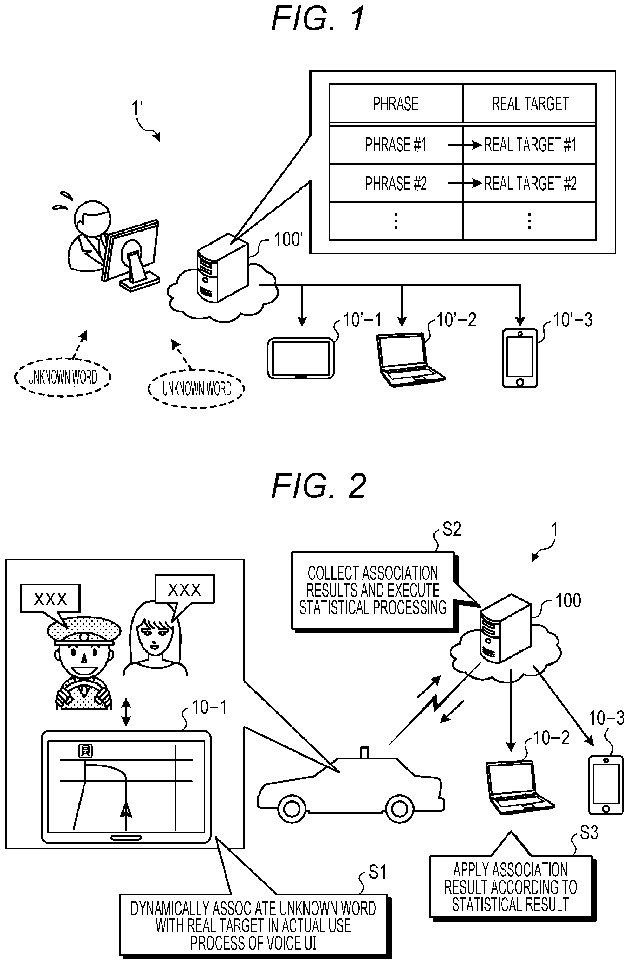

Fig. 1 is a schematic explanatory diagram (part 1) of an information processing method according to an embodiment of the present disclosure. Furthermore, Fig. 2 is a schematic explanatory diagram (part 2) of the information processing method according to the embodiment of the present disclosure. Note that Fig. 1 illustrates a problem in a comparative example of the embodiment of the present disclosure.

### <1-1. Problems in comparative example of present embodiment>

As illustrated in Fig. 1, an information processing system 1' according to a comparative example includes one or more information processing apparatuses 10' and a server apparatus 100'. The information processing apparatus 10' is an apparatus used by an individual user, and executes various types of information processing according to speech content of the user via a voice UI.

Note that the information processing apparatus 10' is a desktop personal computer (PC), a notebook PC, a tablet terminal, a mobile phone, a personal digital assistant (PDA), or the like. Furthermore, the information processing apparatus 10' is, for example, a wearable terminal worn by the user, or an in-vehicle apparatus such as a navigation apparatus or a drive recorder mounted in a vehicle.

The server apparatus 100' is configured as, for example, a cloud server, generates and updates a recognition model used for an NLU process or the like, and distributes the recognition model to the information processing apparatus 10'. As illustrated in Fig. 1, the recognition model includes, for example, learning information in which a linguistic phrase and a real target are associated with each other.

Incidentally, learning work of associating such a linguistic phrase with a real target is manually performed, for example, in a development/design process, an operation process, or the like of the information processing system 1'. However, as a matter of course, there are a large number of linguistic phrases, and the linguistic phrases always change over time.

Therefore, in the information processing system 1', it can be said that it is necessary to always associate a new unknown word with a real target. In the manual learning work as described above, enormous cost is required, and there is a limit to following a change in a phrase.

Note that there is also the information processing apparatus 10' that has a learning mode for learning an unknown word on the basis of speech content of a user and an execution mode for executing various types of information processing corresponding to the learned unknown word, and can cause the user himself/herself to perform learning work. However, in a case where such an apparatus is used, the user needs to explicitly switch between the learning mode and the execution mode to learn or execute speech, and the load on the user is high and the learning efficiency is low.

### <1-2. Outline of present embodiment>

Therefore, in the information processing method according to the embodiment of the present disclosure, an unknown word that is an unknown phrase is detected from text input in a natural language, the occurrence of an event related to a known phrase included in the text is detected, and the unknown word is associated with each of an observation context indicating a situation at the time of detection of the unknown word as a condition context and an observation context indicating a situation at the time of occurrence of the above event as a target context.

Specifically, as illustrated in Fig. 2, in the information processing method according to the embodiment, an unknown word is dynamically associated with a real target in the actual use process of the voice UI (step S1). Fig. 2 illustrates a case where the information processing apparatus 10 is an information processing apparatus 10-1 corresponding to a navigation apparatus mounted in a taxi, for example.

In such a case, in a case where an unknown word estimated as an entity is detected from a conversation between a passenger and a driver of the taxi, the information processing apparatus 10 stores the speech intent in speech including the unknown word, and stores an observation context at the time of detection of the unknown word as a condition context. Here, the observation context is recognition information for recognizing a user and a situation in which the user is placed, and is, for example, sensing data from various sensing devices mounted in the taxi.

Then, in a case where the stored speech intent is executed, the information processing apparatus 10 associates the observation context at the time of execution with the unknown word as a target context corresponding to the real target of the unknown word.

As an example, in a case where the passenger says "turn right at the yellow signboard" and the phrase "yellow signboard" is detected as an unknown word, the information processing apparatus 10 stores "turn right" as the speech intent and stores an observation context at the time of detection of the phrase "yellow signboard" as a condition context. The condition context here is, for example, a current location indicated by a Global Positioning System (GPS) position when the phrase "yellow signboard" is detected.

Then, in a case where the information processing apparatus 10 detects that the taxi actually "turns right" from the observation context or the user's speech, the information processing apparatus associates the observation context at the time of detection with the phrase "yellow signboard" as a target context corresponding to the real target of the phrase "yellow signboard". The target context here is, for example, the current location indicated by a GPS position at the time of execution of "turn right".

Therefore, the information processing apparatus 10 can dynamically acquire the real target of the phrase "yellow signboard".

Note that, for the unknown word associated with the target context, in a case where the unknown word is included in the user's speech or the like thereafter, if the above-described situation in which the speech intent and the condition context match is encountered, the target context associated with the unknown word is interpreted as a real target, and information processing corresponding thereto is executed.

For example, in the example of the "yellow signboard" described above, it is assumed that the same taxi is traveling along a route of "turning right" at an intersection with the "yellow signboard" at another opportunity after association. In such a case, if the taxi has reached the GPS position at the time of detecting the phrase "yellow signboard" on the way to the intersection, the information processing apparatus 10 performs navigation guidance such as "turn right at the yellow signboard" instead of "turn right 100 m ahead".

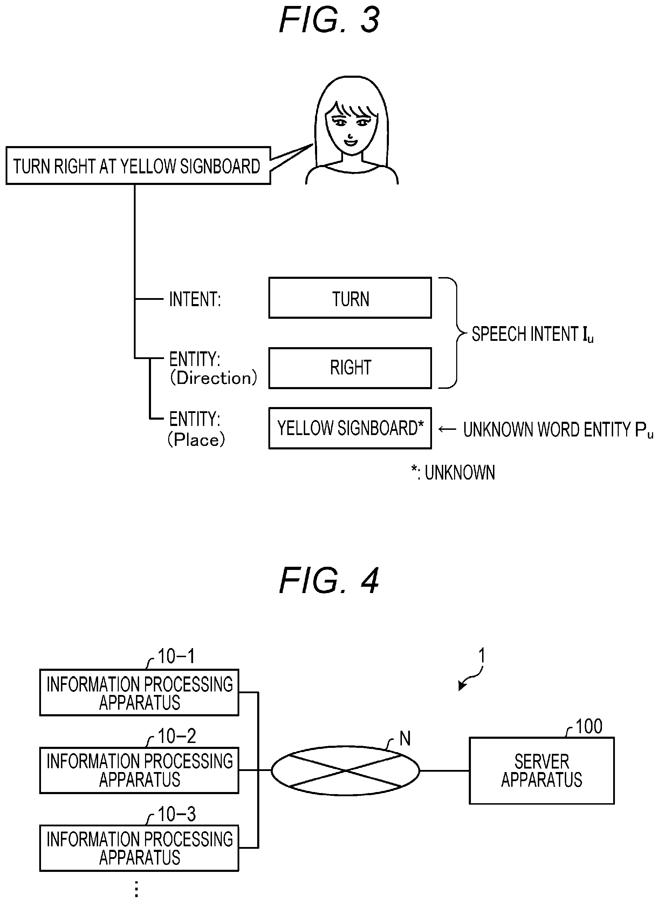

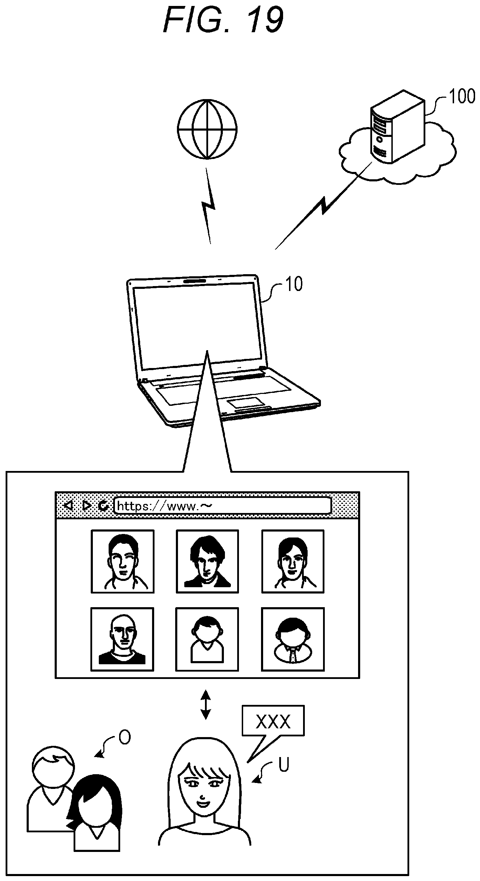

Details of a learning example and an application example of an unknown word based on a conversation between users in a taxi, that is, speech directed to a person will be described later with reference to Figs. 3 to 18. Furthermore, in the information processing method according to the embodiment, learning and application of an unknown word can be performed not only on the basis of speech directed to a person but also on the basis of speech directed to a system. Details thereof will be described later with reference to Figs. 19 to 22 as a modification example of speech directed to a system.

Then, in the information processing method according to the embodiment, the server apparatus 100 collects an association result executed in step S1 and executes statistical processing (step S2). Then, the server apparatus 100 applies the association result to the other information processing apparatus 10 according to the statistical result (step S3).

For example, in the above-described example of the "yellow signboard", upon detecting that the phrase is used (highly related) a predetermined number of times or more in the same condition context and target context within a certain period in the past, the server apparatus 100 distributes the association result of the "yellow signboard" to the entire system. Note that, in this case, the server apparatus 100 can also distribute a phrase tag for a position such as the "yellow signboard" to a map vendor or the like, for example.

Furthermore, if the entity of the "yellow signboard" is removed and is no longer there, the phrase "yellow signboard" is not said, and thus the number of pieces of association data of the "yellow signboard" is statistically reduced and is not distributed to the entire system.

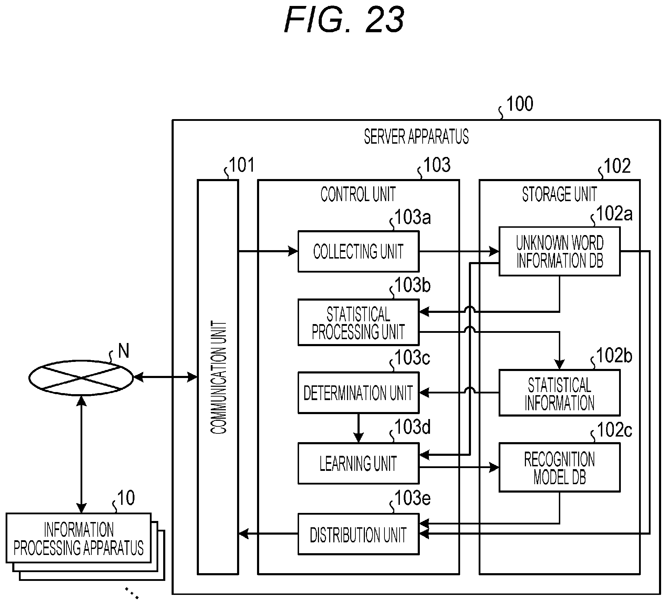

Details of steps S2 and S3 executed by the server apparatus 100 will be described later with reference to Figs. 23 to 28.

As described above, in the information processing method according to the embodiment, an unknown word that is an unknown phrase is detected from text input in a natural language, the occurrence of an event related to the known phrase included in the text is detected, and an observation context indicating a situation at the time of the detection of the unknown word is associated with the unknown word as a condition context, and the observation context indicating the situation at the time of the occurrence of the event is associated with the unknown word as a target context.

Therefore, according to the information processing method according to the embodiment, association between a phrase and a real target is automatically accumulated as a user uses the system via the voice UI, and thus it is possible to execute interpretation of speech following the change in a language that cannot be followed manually or information processing In other words, since a corresponding vocabulary of the voice UI system is updated by automatically following the use trend of the user's actual language phrase instead of a specification due to a developer's product-out, the convenience of the voice UI is enhanced.

That is, according to the information processing method according to the embodiment, it is possible to efficiently associate an unknown word with a real target without imposing a load on a user.

Hereinafter, a configuration example of the information processing system 1 to which the information processing method according to the above-described embodiment is applied will be described more specifically.

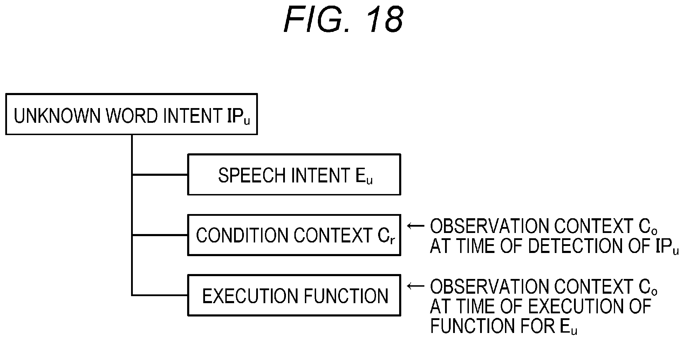

Note that, in the following description, a case where an unknown word is an entity that is a target/attribute of the speech intent "turn right", such as the phrase "yellow signboard", will be described as a main example, but the intent may be an unknown word. Such an example will be described later with reference to Fig. 18.

Furthermore, here, terms and the like used in the following description will be described. Fig. 3 is an explanatory diagram of terms.

As illustrated in Fig. 3, it is assumed that the user has said "turn right at the yellow signboard". In such a case, in the present embodiment, "turn" is extracted as the "intent" indicating the intention of the user through the NLU process. Furthermore, "right" and "yellow signboard" are extracted as "entities" serving as target/attribute of the intent, in other words, parameters of an operation corresponding to the intent.

Note that "right" can be estimated to be a parameter indicating a direction through the NLU process. Furthermore, "yellow signboard" can be estimated to be a parameter indicating a place (Place) through the NLU process, but is unknown as a phrase, for example. In such a case, in the following description, a portion corresponding to "turn" and" right", that is, "turn right" will be referred to as "speech intent Iᵤ". That is, the speech intent Iᵤ is a known portion of the user's speech that includes the intent. In contrast, a portion corresponding to the "yellow signboard" will be referred to as an "unknown word entity Pᵤ".

With respect to the intent estimated from the speech text of the user in the NLU process, the unknown word entity Pᵤ refers to a phrase in a case where a phrase having an entity serving as a target/attribute of the intent does not exist in a dictionary registered in the NLU, or in a case where the phrase is registered in the dictionary of the NLU as a phrase but there is no phrase associated with the phrase in a real target that can be handled as a target/attribute of the intent in execution interaction control or there is a plurality of phrases, and thus the real target cannot be uniquely specified. In other words, the unknown word is a phrase that does not exist in dictionary information used in the NLU process for the speech text of the user, or a phrase that exists in the dictionary information but cannot uniquely specify a real target corresponding to the phrase in information processing based on the above text.

Furthermore, although not illustrated in the drawing, the above-described observation context will be hereinafter referred to as an "observation context C ". Similarly, the condition context will be hereinafter referred to as a "condition context Cᵣ". Furthermore, similarly, the target context will be hereinafter referred to as a "target context Ct".

### <<2. Configuration of information processing system>>

### <2-1. Overall configuration>

Fig. 4 is a diagram illustrating a configuration example of the information processing system 1 according to the embodiment of the present disclosure. As illustrated in Fig. 4, the information processing system 1 includes one or more information processing apparatuses 10 and a server apparatus 100. Furthermore, as illustrated in Fig. 4, the information processing apparatus 10 and the server apparatus 100 are connected to each other via a network N such as the Internet or a mobile telephone network, and transmit and receive data to and from each other via the network N.

Similarly to the information processing apparatus 10' described above, the information processing apparatus 10 is an apparatus used by each user, and executes various types of information processing according to speech content of the user via the voice UI. The information processing apparatus 10 is a desktop PC, a notebook PC, a tablet terminal, a mobile phone, a PDA, or the like. Furthermore, the information processing apparatus 10 is, for example, a wearable terminal worn by the user, or an in-vehicle apparatus such as a navigation apparatus or a drive recorder mounted in a vehicle.

In a case where the unknown word entity Pᵤ is detected, each information processing apparatus 10 associates the observation context Cₒ at the time of the detection with the unknown word entity Pᵤ as the condition context Cᵣ. Furthermore, in a case where execution of the speech intent Iᵤ is detected, the information processing apparatus 10 associates the observation context Cₒ at the time of the detection with the unknown word entity Pᵤ as the target context Ct. Then, the information processing apparatus 10 transmits unknown word information that is the association result to the server apparatus 100.

The server apparatus 100 is configured as, for example, a cloud server, and collects the unknown word information transmitted from each information processing apparatus 10. Furthermore, the server apparatus 100 manages the collected unknown word information as big data and executes statistical processing on the unknown word information. Furthermore, the server apparatus 100 applies the unknown word information to the entire system according to a statistical result of the statistical processing. Note that a specific configuration example of the server apparatus 100 will be described later with reference to Figs. 23 to 28.

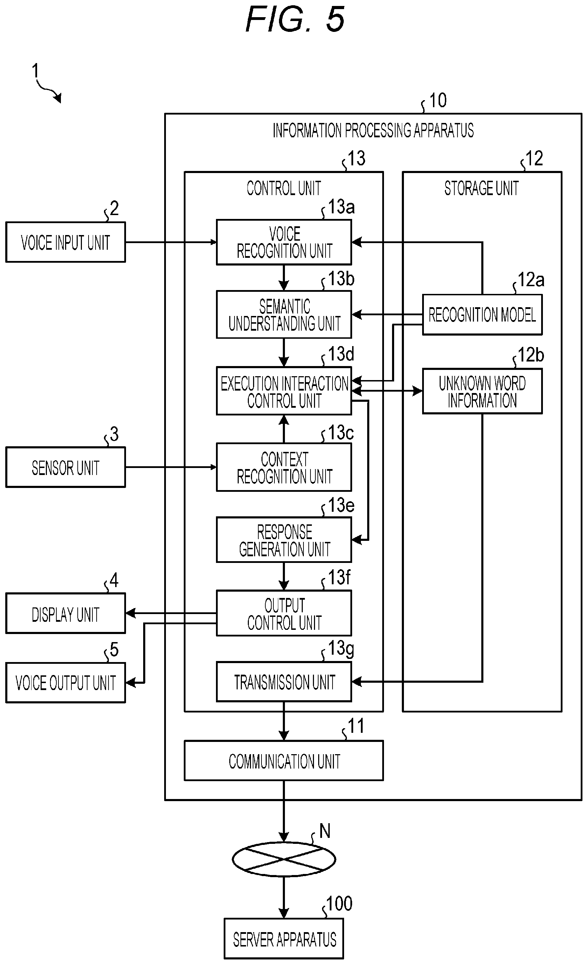

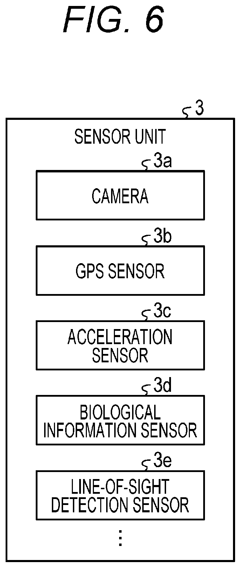

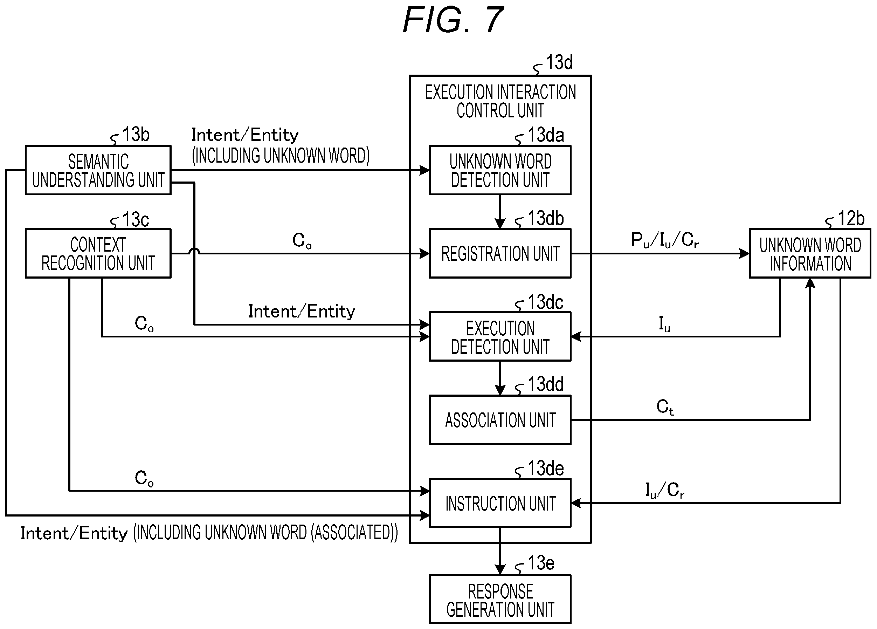

Next, Fig. 5 is a block diagram illustrating a configuration example of the information processing apparatus 10. Furthermore, Fig. 6 is a block diagram illustrating a configuration example of a sensor unit 3. Furthermore, Fig. 7 is a block diagram illustrating a configuration example of an execution interaction control unit 13d.

Note that, in Figs. 5 to 7 (and Fig. 23 that will be described later), only constituents necessary for describing features of the embodiment are illustrated, and descriptions of general constituents are omitted.

In other words, each constituent illustrated in Figs. 5 to 7 (and Fig. 23) is functionally conceptual, and does not necessarily have to be physically configured as illustrated. For example, a specific form of distribution and integration of each block is not limited to the illustrated form, and all or some thereof can be functionally or physically distributed and integrated in any unit according to various loads, usage conditions, and the like.

Furthermore, in the description using Figs. 5 to 7 (and Fig. 23), the description of the already described constituents may be simplified or omitted.

### <2-2. Configuration of information processing apparatus>

As illustrated in Fig. 5, the information processing apparatus 10 is connected to a voice input unit 2, a sensor unit 3, a display unit 4, and a voice output unit 5. The voice input unit 2 is realized by a voice input device such as a microphone.

The sensor unit 3 includes various sensors for recognizing a user and a situation in which the user is placed. As illustrated in Fig. 6, the sensor unit 3 includes, for example, a camera 3a, a GPS sensor 3b, an acceleration sensor 3c, a biological information sensor 3d, and a line-of-sight detection sensor 3e.

The camera 3a uses, for example, a complementary metal oxide semiconductor (CMOS) image sensor, a charge coupled device (CCD) image sensor, or the like as an imaging element to capture an image for recognizing the user and the situation in which the user is placed. For example, the camera 3a is an in-vehicle camera provided to be able to image the inside and outside of a taxi.

The GPS sensor 3b is a GPS receiver, and detects a GPS position on the basis of a received GPS signal. The acceleration sensor 3c detects acceleration in each direction. As the acceleration sensor 3c, for example, a triaxial acceleration sensor such as a piezoresistive type sensor or a capacitance type sensor may be used.

The biological information sensor 3d detects biological information of the user such as a pulse, respiration, and a body temperature of the user. The line-of-sight detection sensor 3e detects a line of sight of the user. Note that the configuration of the sensor unit 3 illustrated in Fig. 6 is merely an example, and various sensors other than those illustrated in Fig. 6 may be included as long as the sensors are used for recognizing a user and a situation in which the user is placed.

The sensor unit 3 inputs sensing data by these various sensor groups to the information processing apparatus 10 as the observation context Cₒ described above.

The description returns to Fig. 5. The display unit 4 is realized by an image output device such as a display. The voice output unit 5 is realized by a voice output device such as a speaker.

The information processing apparatus 10 includes a communication unit 11, a storage unit 12, and a control unit 13. The communication unit 11 is realized by, for example, a network interface card (NIC) or the like. The communication unit 11 is connected to the server apparatus 100 in a wireless or wired manner via the network N, and transmits and receives information to and from the server apparatus 100.

The storage unit 12 is realized by, for example, a semiconductor memory element such as a random access memory (RAM), a read only memory (ROM), or a flash memory, or a storage device such as a hard disk or an optical disc. In the example illustrated in Fig. 5, the storage unit 12 stores a recognition model 12a and unknown word information 12b.

The recognition model 12a is a model group for voice recognition in an automatic speech recognition (ASR) process that will be described later, semantic understanding in an NLU process, interaction recognition in an execution interaction control process, and the like, and is generated by the server apparatus 100 as a learning model group using a machine learning algorithm such as deep learning or the like.

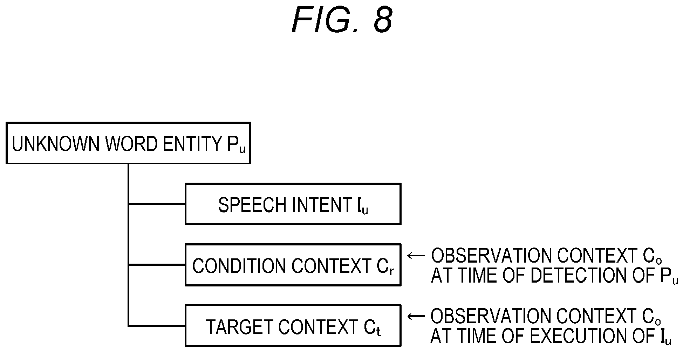

The unknown word information 12b will be described with reference to Fig. 8. Fig. 8 is an explanatory diagram of the unknown word information 12b. As illustrated in Fig. 8, the unknown word information 12b is information in which the speech intent Iᵤ, the condition context Cᵣ, and the target context Ct are associated with the unknown word entity Pᵤ.

As illustrated in the figure, the condition context Cᵣ corresponds to the observation context Cₒ at the time of detection of the unknown word entity Pᵤ. Furthermore, the target context Ct corresponds to the observation context Cₒ at the time of execution of the speech intent Iᵤ.

The unknown word information 12b is registered for each unknown word entity Pᵤ by the execution interaction control unit 13d that will be described later.

The description returns to Fig. 5. The control unit 13 is a controller, and is realized by, for example, a central processing unit (CPU), a micro processing unit (MPU), or the like executing various programs stored in the storage unit 12 by using a RAM as a work area. Furthermore, the control unit 13 may be realized by, for example, an integrated circuit such as an application specific integrated circuit (ASIC) or a field programmable gate array (FPGA).

The control unit 13 includes a voice recognition unit 13a, a semantic understanding unit 13b, a context recognition unit 13c, an execution interaction control unit 13d, a response generation unit 13e, an output control unit 13f, and a transmission unit 13g, and realizes or executes a function or an action of information processing described below.

The voice recognition unit 13a performs the ASR process on voice data input from the voice input unit 2, and converts the voice data into text data. Furthermore, the voice recognition unit 13a outputs the converted text data to the semantic understanding unit 13b.

The semantic understanding unit 13b performs a semantic understanding process such as an NLU process on the text data converted by the voice recognition unit 13a, estimates an intent and an entity (including an unknown word), and outputs an estimation result to the execution interaction control unit 13d.

The context recognition unit 13c acquires the sensing data from the sensor unit 3, and outputs the sensing data as the observation context Cₒ to the execution interaction control unit 13d.

### <2-3. Configuration of execution interaction control unit>

In a case where an entity of an unknown word is included in the estimation result from the semantic understanding unit 13b, the execution interaction control unit 13d extracts the entity as the unknown word entity Pᵤ. Furthermore, the execution interaction control unit 13d associates the condition context Cᵣ and the target context Ct with the unknown word entity Pᵤ on the basis of the observation context Cₒ input from the context recognition unit 13c, and generates the unknown word information 12b.

A configuration example of the execution interaction control unit 13d will be described more specifically. As illustrated in Fig. 7, the execution interaction control unit 13d includes a detection of the unknown word detection unit 13da, a registration unit 13db, an execution detection unit 13dc, an association unit 13dd, and an instruction unit 13de.

The detection of the unknown word detection unit 13da detects an unknown word from the intent and the entity (including the unknown word) estimated by semantic understanding unit 13b. In a case where the detection of the unknown word detection unit 13da detects the entity of the unknown word, the registration unit 13db registers the entity as the unknown word entity Pᵤ in the unknown word information 12b. At the same time, the registration unit 13db registers the speech intent Iᵤ of the phrase including the unknown word entity Pᵤ in the unknown word information 12b in association with the unknown word entity Pᵤ.

Furthermore, the registration unit 13db registers the observation context Cₒ input from the context recognition unit 13c at the time of detection of such an unknown word in the unknown word information 12b in association with the unknown word entity Pᵤ as the condition context Cᵣ.

The execution detection unit 13dc detects execution of the speech intent Iᵤ registered in the unknown word information 12b on the basis of the observation context Cₒ input from the context recognition unit 13c or the intent and the entity input from the semantic understanding unit 13b.

In a case where the execution detection unit 13dc detects the execution of the speech intent Iᵤ, the association unit 13dd associates the observation context Cₒ input from the context recognition unit 13c at the time of detection of the execution with the unknown word entity Pᵤ of the unknown word information 12b as the target context Ct.

In a case where the intent/entity (including the associated unknown word) input from the semantic understanding unit 13b and the observation context Cₒ input from the context recognition unit 13c match the speech intent Iᵤ and the condition context Cᵣ of the unknown word information 12b, the instruction unit 13de instructs the response generation unit 13e to generate a response using the unknown word entity Pᵤ associated with the speech intent Iᵤ and the condition context Cᵣ.

The description returns to Fig. 5. The response generation unit 13e generates image information and voice information to be presented to the user in response to an instruction from the execution interaction control unit 13d.

The output control unit 13f presents the image information generated by the response generation unit 13e to the user via the display unit 4. Furthermore, the output control unit 13f performs a voice synthesis process on the voice information generated by the response generation unit 13e and presents the voice information to the user via the voice output unit 5.

The transmission unit 13g appropriately transmits the unknown word information 12b to the server apparatus 100 via the communication unit 11. Note that the term "appropriately" as used herein may be any time or may be periodic. Furthermore, the term "appropriately" may be every time the unknown word information 12b is updated.

### <2-4. Specific example of processing details (case of human-directed speech)>

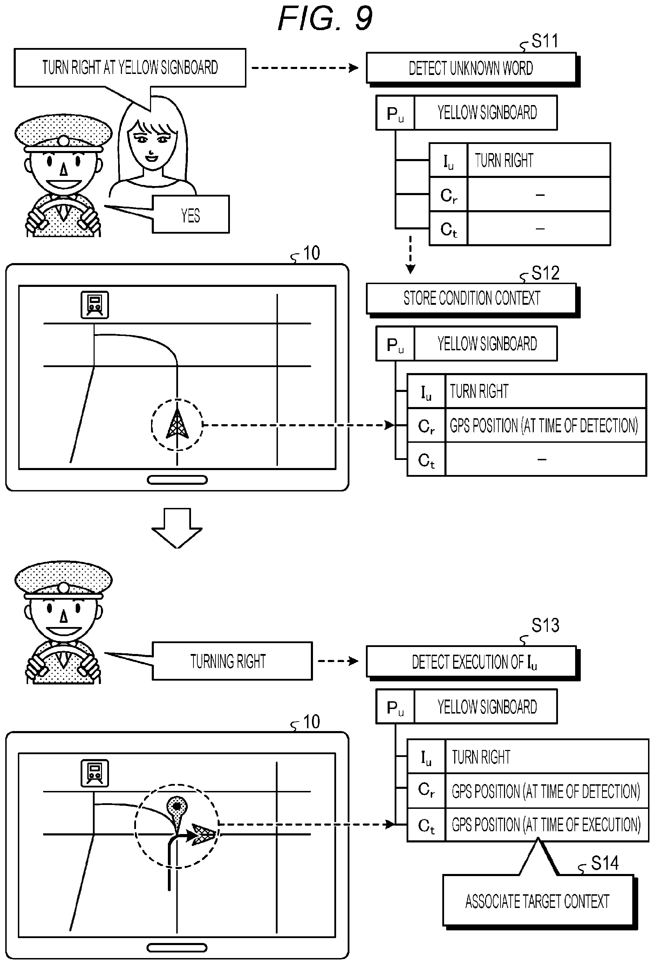

Next, the details of the processes described so far will be described more specifically by taking a conversation scene between the passenger and the driver of the taxi illustrated in Fig. 2 as an example. Figs. 9 to 16 are processing explanatory diagrams (part 1) to (part 8) in a case of human-directed speech.

As illustrated in Fig. 9, it is assumed that the passenger says "turn right at the yellow signboard" (refer to Fig. 3). Then, the information processing apparatus 10 detects an unknown word (step S11), registers the unknown word entity Pᵤ "yellow signboard" in the unknown word information 12b, and registers the speech intent Iᵤ "turn right" in association with the unknown word entity Pᵤ "yellow signboard".

Furthermore, the information processing apparatus 10 stores the observation context Cₒ at the time of detection of the unknown word as the condition context Cᵣ in association with the unknown word entity Pᵤ "yellow signboard" (step S12). In the example in Fig. 9, the information processing apparatus 10 stores a GPS position (that is, the current location at the time of detection of the unknown word) indicated by an own vehicle position mark in the figure as the condition context Cᵣ.

Then, the information processing apparatus 10 detects execution of the speech intent Iᵤ registered in the unknown word information 12b on the basis of the observation context Cₒ or the speech (step S13). Note that, here, an example is illustrated in which execution of the speech intent Iᵤ is detected from the driver's speech of "turning right".

Then, the information processing apparatus 10 associates the observation context Cₒ at the time of detection of execution of the speech intent Iᵤ with the unknown word entity Pᵤ "yellow signboard" as the target context Ct (step S14). In the example in Fig. 9, the information processing apparatus 10 associates a GPS position (that is, the current location at the time of detection of execution) indicated by a pin mark indicating an intersection position in the figure as the target context Ct.

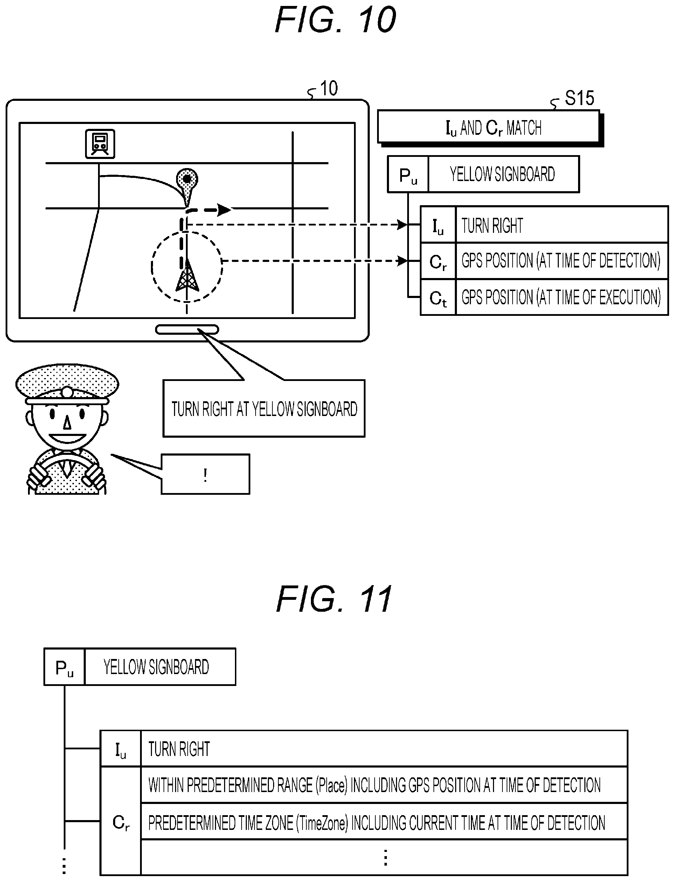

Then, after the unknown word information 12b related to such an unknown word entity Pᵤ "yellow signboard" is generated, as illustrated in Fig. 10, if the speech intent Iᵤ and the condition context Cᵣ match (step S15), the information processing apparatus 10 interprets the target context Ct as a real target and executes information processing corresponding thereto.

That is, in a case where the taxi is traveling along a route of "turning right" at the intersection where the "yellow signboard" is present, if the taxi has reached the GPS position indicated by the condition context Cᵣ on the way to the intersection, the information processing apparatus 10 performs navigation guidance such as "turn right at the yellow signboard" as illustrated in the figure.

Note that, in this case, if the speech intent Iᵤ is simply associated with the unknown word entity Pᵤ "yellow signboard" as "turn", the information processing apparatus 10 can perform navigation guidance of "turn left on the yellow signboard" in a case of turning left at the same intersection.

Furthermore, as another example, for example, when there is a place that the driver does not want to pass while driving in route search, and the like, by speaking "pass by the yellow signboard", the GPS position indicated by the target context Ct of the "yellow signboard" can be designated as the waypoint of route search.

Note that, in Figs. 9 and 10, the case where the condition context Cᵣ is the GPS position at the time of detection of the unknown word has been described as an example. However, for example, as illustrated in Fig. 11, the condition context Cᵣ may be within a predetermined range (Place) including the GPS position at the time of detection of the unknown word.

Furthermore, in a case where an attribute regarding a color of the unknown word entity Pᵤ is extracted through the NLU process, such as "yellow" of "yellow signboard", for example, it is predicted that the appearance of the color of the signboard changes depending on a time zone. Therefore, in such a case, as illustrated in the same figure, the condition context Cᵣ may include, for example, a predetermined time zone (TimeZone) including the current time at the time of detection of the unknown word. Note that, in a case where a plurality of condition contexts Cᵣ is associated with the unknown word entity Pᵤ, the information processing apparatus 10 determines the condition contexts Cᵣ as an AND condition.

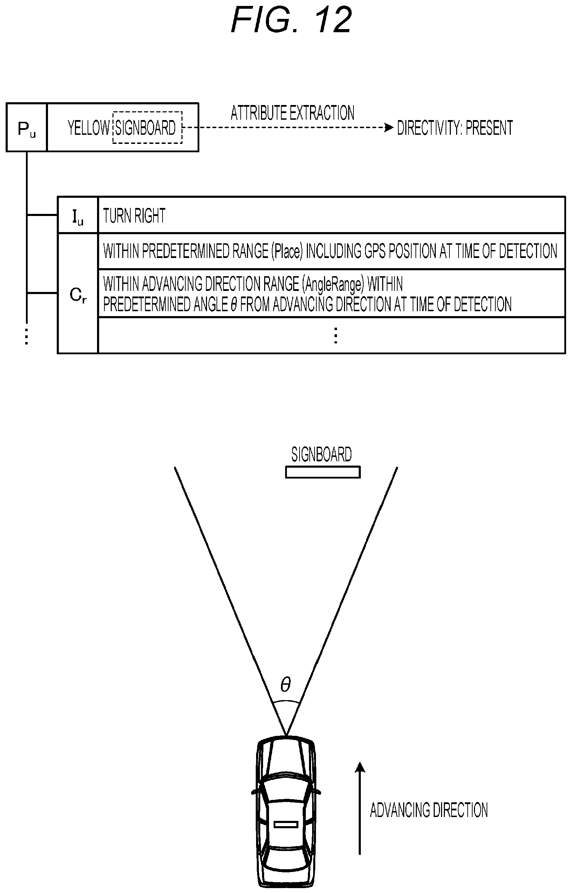

Furthermore, an attribute is not limited to the attribute regarding a color, and since the "signboard" of the "yellow signboard" usually has a flat display surface, as illustrated in Fig. 12, an attribute "directivity present" may be extracted through the NLU process.

In such a case, as illustrated in the same figure, the condition context Cᵣ may include, in addition to within a predetermined range (Place) including the GPS position at the time of detection of the unknown word, for example, an advancing direction range (AngleRange) within a predetermined angle θ from the advancing direction at the time of detection of the unknown word.

In the case of Fig. 12, when the unknown word information 12b is applied, the phrase "yellow signboard" is used for a navigation speech, speech interpretation of the user, and the like only in within the predetermined range of (Place) and the advancing direction range of (AngleRange) illustrated in the same figure. That is, since a directional signboard is not seen from an advancing direction not matching the condition context Cᵣ, the phrase "yellow signboard" is not used in such a case.

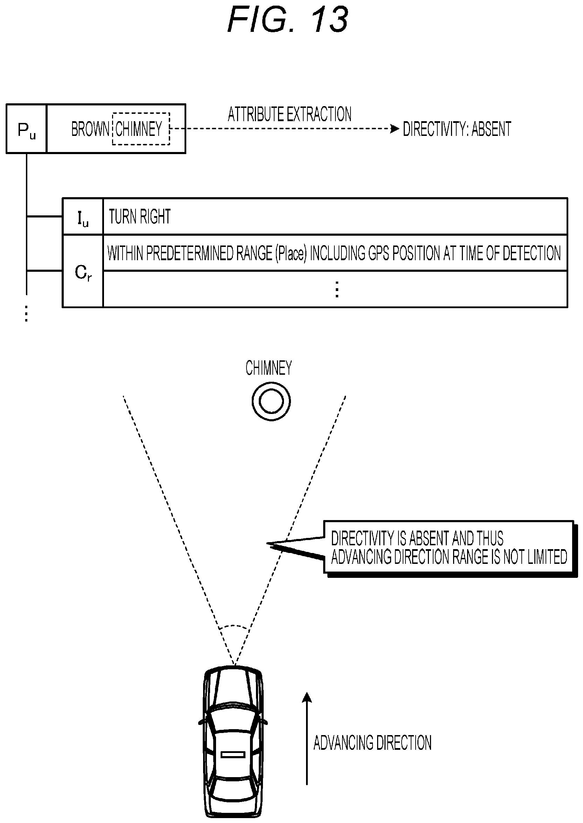

In contrast, as illustrated in Fig. 13, the unknown word entity Pᵤ is assumed to be a "brown chimney". In such a case, with respect to the "chimney" of the" brown chimney", an attribute "directivity absent" may be extracted through the NLU process.

In such a case, as illustrated in the same figure, the condition context Cᵣ does not include the advancing direction range (AngleRange) within the predetermined angle θ from the advancing direction at the time of detection of the unknown word, unlike the case of "directivity present".

That is, since the chimney is visible from any advancing direction and has no directivity, an advancing direction range is not limited. In the case of Fig. 13, when the unknown word information 12b is applied, the phrase "brown chimney" is used for a navigation speech, the speech interpretation of the user, and the like regardless of an advancing direction range as long as it is within a predetermined range of (Place) illustrated in the same figure.

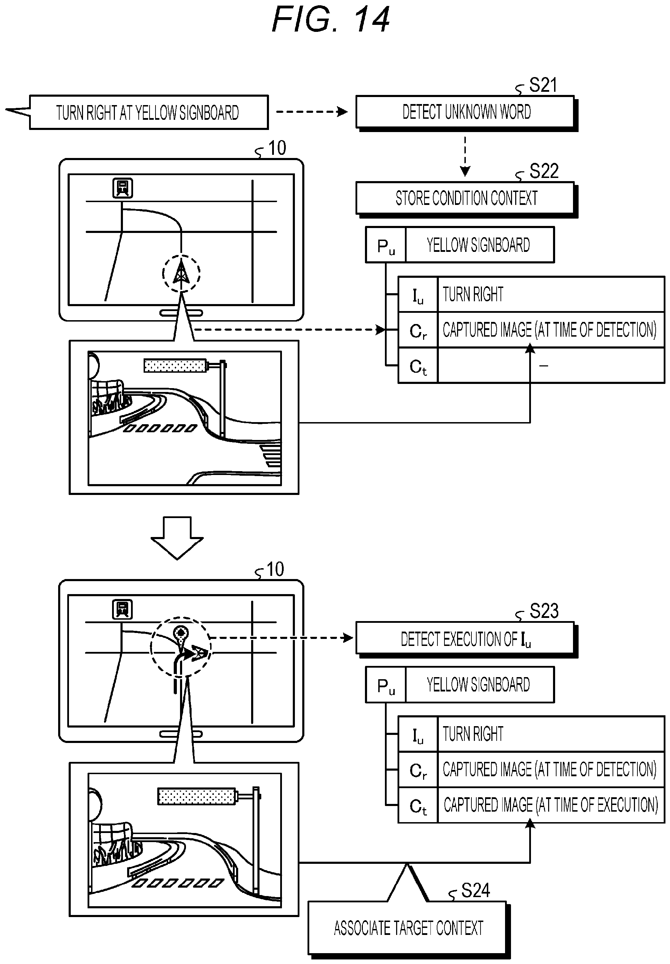

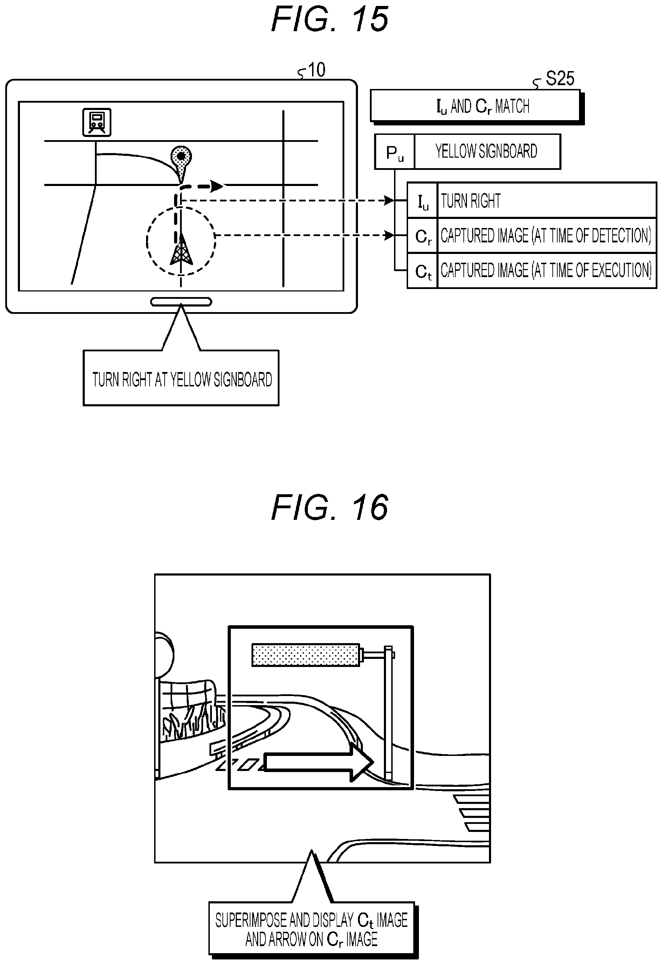

Incidentally, an example in which the GPS position detected by the GPS sensor 3b is used as the condition context Cᵣ and the target context Ct has been described above, but the present disclosure is not limited thereto. For example, an image captured by the camera 3a such as a drive recorder may be used as the condition context Cᵣ and the target context Ct. An example of such a case is illustrated in Figs. 14 to 16. Note that, in Figs. 14 and 16, a rectangular portion filled with a dotted pattern represents a "yellow signboard".

Similarly to the case already illustrated in Fig. 9, it is assumed that an unknown word has been detected on the basis of the speech of the passenger "turn right at the yellow signboard" as illustrated in Fig. 14 (step S21). Then, it is assumed that the unknown word entity Pᵤ "yellow signboard" is registered in the unknown word information 12b, and the speech intent Iᵤ "turn right" is registered in association with the unknown word entity Pᵤ "yellow signboard".

Then, in the case of the example in Fig. 14, the information processing apparatus 10 associates the captured image from the camera 3a at the time of the detection of the unknown word in step S21 with the unknown word entity Pᵤ "yellow signboard", and stores the image as the condition context Cᵣ (step S22).

Then, the information processing apparatus 10 detects execution of the speech intent Iᵤ registered in the unknown word information 12b on the basis of the observation context Cₒ or the speech (step S23).

Then, in the case of the example in Fig. 14, the information processing apparatus 10 associates the captured image from the camera 3a at the time of detection of execution of the speech intent Iᵤ in step S23 with the unknown word entity Pᵤ "yellow signboard" as the target context Ct (step S24).

Then, after the unknown word information 12b regarding such an unknown word entity Pᵤ "yellow signboard" is generated, as illustrated in Fig. 15, if the speech intent Iᵤ and the condition context Cᵣ match (step S25), the information processing apparatus 10 interprets the target context Ct as a real target and executes information processing corresponding thereto.

In other words, in a case where the taxi is traveling along the route of "turning right" at the intersection where the "yellow signboard" is present, if the information processing apparatus 10 has recognized, from the captured image from the camera 3a, a landscape corresponding to the captured image indicated by the condition context Cᵣ on the way to the intersection by the taxi, the information processing apparatus 10 performs navigation guidance of "turn right at the yellow signboard", for example, as illustrated in the same figure.

Then, in this case, the information processing apparatus 10 superimposes and displays an image of the target context Ct and an arrow on an image of the condition context Cᵣ, for example, as illustrated in Fig. 16. The display at this time may be projected on, for example, a windshield or the like such that the driver can visually recognize the display while driving. Therefore, the route guidance for the driver can be easily performed not only by voice but also visually.

Note that the display example illustrated in Fig. 16 is merely an example, and the display form is not limited. For example, the arrow may not necessarily be displayed. Furthermore, the condition context Cᵣ or the target context Ct is not limited to a captured image from the camera 3a as long as the context can be visually recognized by a user, and may be, for example, an image or the like displayed in a display region of a navigation screen.

Furthermore, in a case where a landscape corresponding to the captured image indicated by the condition context Cᵣ is subjected to image recognition from the captured image from the camera 3a, the information processing apparatus 10 does not necessarily interpret, for example, a color of "yellow signboard". Therefore, there is an advantage that a processing load can be reduced. Note that, of course, a color may also be interpreted.

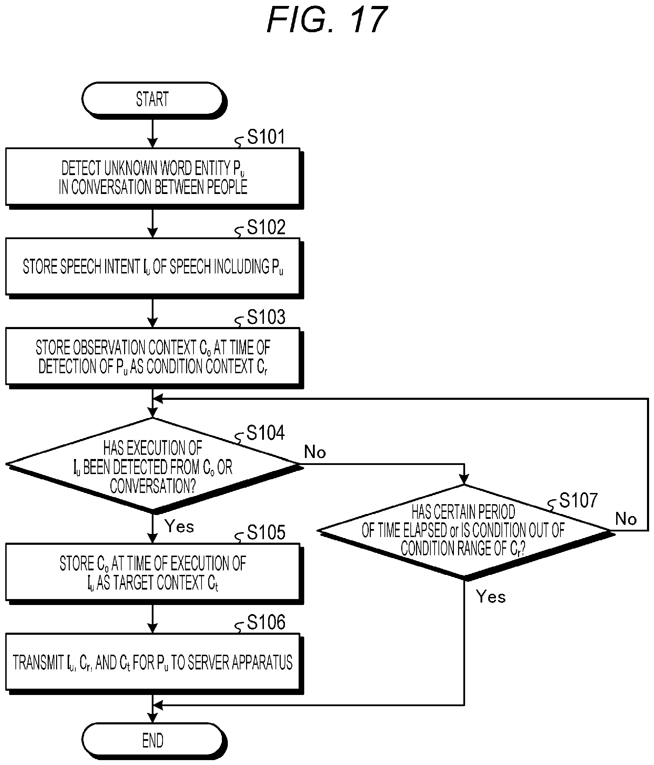

Next, a processing procedure in a case of human-directed speech executed by the information processing apparatus 10 according to the embodiment will be described with reference to Fig. 17. Fig. 17 is a flowchart illustrating a processing procedure in the case of human-directed speech.

As shown in Fig. 17, first, the detection of the unknown word detection unit 13da detects the unknown word entity Pᵤ in a conversation between people (step S101) . Then, the registration unit 13db stores the speech intent Iᵤ of the speech including the unknown word entity Pᵤ in the unknown word information 12b together with the unknown word entity Pᵤ (step S102) .

Furthermore, the registration unit 13db stores the observation context Cₒ at the time of detection of the unknown word entity Pᵤ as the condition context Cᵣ in the unknown word information 12b (step S103) .

Subsequently, the execution detection unit 13dc detects execution of the speech intent Iᵤ from the observation context Cₒ or the conversation (step S104) . Here, in a case where execution of the speech intent Iᵤ has been detected (step S104, Yes), the association unit 13dd stores the observation context Cₒ at the time of execution of the speech intent Iᵤ as the target context Ct in the unknown word information 12b (step S105).

Then, the transmission unit 13g transmits the unknown word information 12b, that is, the speech intent Iᵤ, the condition context Cᵣ, and the target context Ct for the unknown word entity Pᵤ to the server apparatus 100 (step S106), and ends the process.

Note that, in a case where execution of the speech intent Iᵤ is not detected from the observation context Cₒ or the conversation (step S104, No), it is determined whether a certain period of time has elapsed or whether the condition is out of a condition range of the condition context Cᵣ (step S107).

Here, in a case where it is determined that the certain period of time has not elapsed and the condition is within the condition range of the condition context Cᵣ (step S107, No), the process from step S104 is repeatedly performed. On the other hand, in a case where it is determined that the certain period of time has elapsed or the condition is out of the condition range of the condition context Cᵣ (step S107, Yes), the process is ended.

Incidentally, although the case where the entity is an unknown word as in the phrase "yellow signboard" has been mainly described so far, the intent may be an unknown word. Such a modification example will be described with reference to Fig. 18. Fig. 18 is an explanatory diagram of unknown word information 12b according to a modification example.

For example, in semantic understanding of user's speech, there is a case where a verb portion that is estimated as an intent, such as "do that", cannot be interpreted. In such a case, the information processing apparatus 10 registers the intent as the unknown word intent IPᵤ in the unknown word information 12b as illustrated in Fig. 18.

Then, as illustrated in Fig. 18, the information processing apparatus 10 associates a speech entity Eᵤ, the condition context Cᵣ, and an execution function with an unknown word intent IPᵤ. The speech entity Eᵤ is a phrase estimated as a known entity in the user's speech.

Then, the condition context Cᵣ in such a case corresponds to the observation context Cₒ at the time of detection of the unknown word intent IPᵤ, as illustrated in the same figure. Furthermore, the execution function corresponds to the observation context Cₒ at the time of execution of a function for the speech entity Eᵤ.

That is, in the example in Fig. 18, in a case where the unknown word intent IPᵤ is detected, the registration unit 13db registers the unknown word intent IPᵤ and the speech entity Eᵤ in the unknown word information 12b. Furthermore, the registration unit 13db registers the observation context Cₒ at the time of detection of the unknown word intent IPᵤ in association with the unknown word intent IPᵤ as the condition context Cᵣ.

Then, in a case where the execution detection unit 13dc detects that the function for the speech entity Eᵤ has been executed on the basis of the observation context Cₒ, the association unit 13dd associates the function with the unknown word intent IPᵤ as the execution function. Therefore, the information processing apparatus 10 can dynamically acquire the execution function of the unknown word intent IPᵤ.

In addition to the association of the unknown word entity Pᵤ with the target context Ct, the unknown word intent IPᵤ is also accumulated in association with the execution function, so that the entire vocabulary that can be interpreted and expressed by the voice UI is automatically increased, and thus the interaction performance can be improved.

Note that by storing and accumulating attributes of a speaker in association as the condition context Cᵣ of the unknown word intent IPᵤ, it is useful for the system to interpret and express phrases having different expressions depending on attributes such as dialect (area), age, and gender.

### <2-5. Specific example of processing details (case of system-directed speech)>

Next, details of a process in a case of system-directed speech will be specifically described. Figs. 19 to 21 are processing explanatory diagrams (part 1) to (part 3) in the case of system-directed speech. Here, a case where a user U selects an image in an audio browser will be described as an example of the case of the system-directed speech. Furthermore, also here, a case where an unknown word is an entity will be described as a main example.

As illustrated in Fig. 19, it is assumed that the user U selects an image on an audio browser by using the information processing apparatus 10 such as a notebook PC that can use the audio browser. Note that the information processing apparatus 10 can be connected to the Internet and can also communicate with the server apparatus 100. Furthermore, there may be an attendance O such as a family member or a friend around the user U.

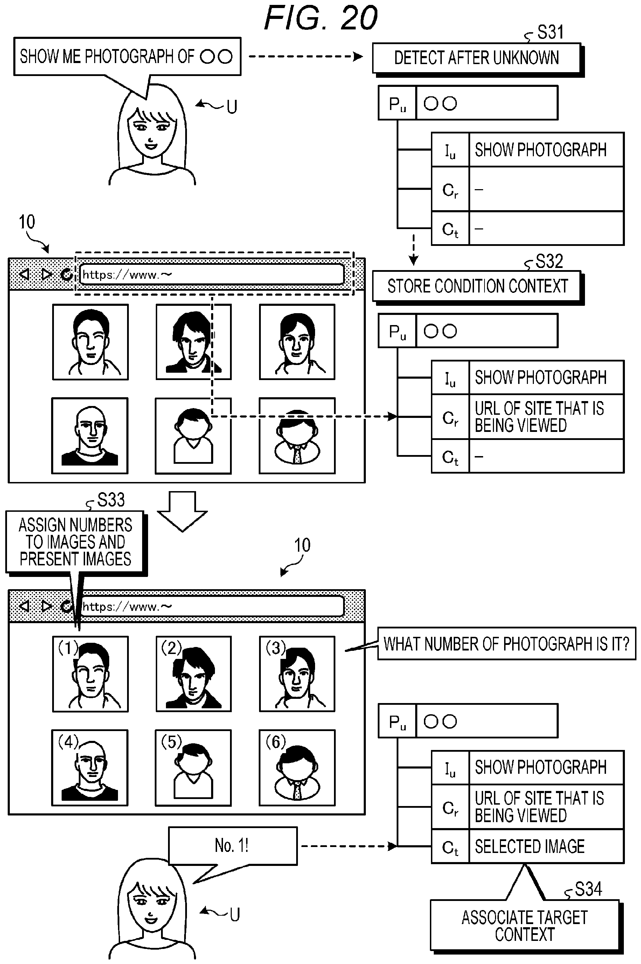

In such a situation, as illustrated in Fig. 20, it is assumed that the user U has said "show me a photograph of OO". Here, "OO" is a naming such as a name or a nickname that identifies a person appearing in the photograph, and is an unknown word.

Then, the information processing apparatus 10 detects the unknown word (step S31), registers the unknown word entity Pᵤ "OO" in the unknown word information 12b, and registers the speech intent Iᵤ "show the photograph" in association with the unknown word entity Pᵤ "OO".

Furthermore, the information processing apparatus 10 stores the observation context Cₒ at the time of detection of the unknown word in association with the unknown word entity Pᵤ "OO" as the condition context Cᵣ (step S32). In the example in Fig. 20, the information processing apparatus 10 stores a uniform resource locator (URL) of a site that is being viewed by the user U as the condition context Cᵣ.

Then, the information processing apparatus 10 assigns numbers to all images that can be execution targets of the speech intent Iᵤ on the same site and presents the images to the user U (step S33). Then, an inquiry to prompt selection of an image is made to the user U (refer to "What number of photograph is it?" in the figure).

Then, if the user U selects an image in response to the inquiry (refer to "No. 1!" in the figure), the information processing apparatus 10 associates the observation context Cₒ, that is, the selected image with the unknown word entity Pᵤ "OO" as the target context Ct (step S34).

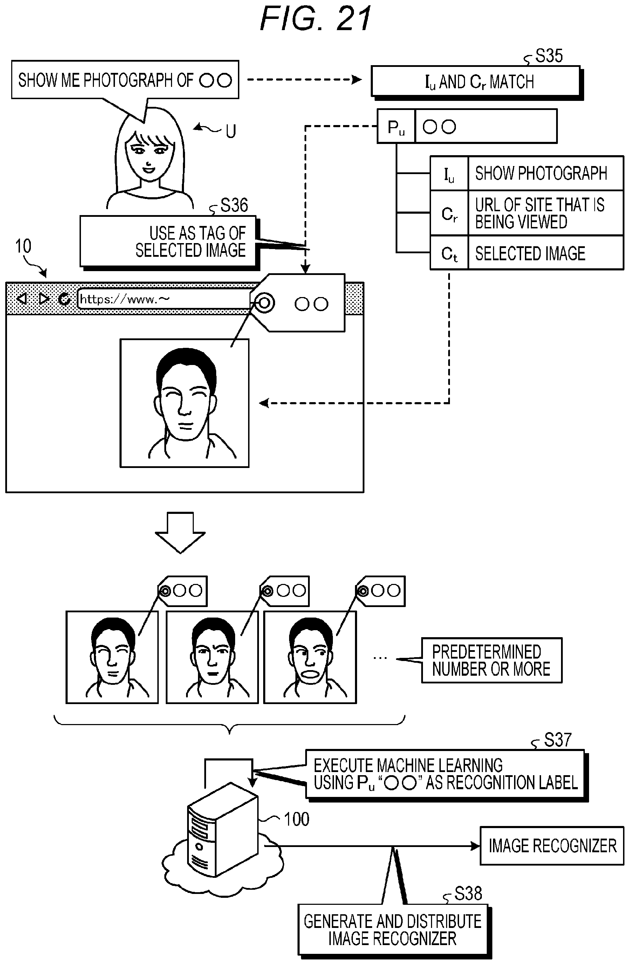

Then, after the unknown word information 12b regarding such an unknown word entity Pᵤ "OO" is generated, as illustrated in Fig. 21, if the speech intent Iᵤ and the condition context Cᵣ match (step S35), the information processing apparatus 10 interprets the target context Ct as a real target and executes information processing corresponding thereto.

In other words, in a case where the user U says "show me the photograph of OO" while viewing the same site on another occasion or the like, the information processing apparatus 10 uses the unknown word entity Pᵤ "OO" as a tag of the selected image (step S36), and uses the unknown word entity Pᵤ as a search tag of the image at the time of speech interpretation.

Furthermore, it is assumed that the unknown word information 12b is transmitted to the server apparatus 100, and as a result of statistical processing performed in the server apparatus 100, a predetermined number or more of unknown word entities Pᵤ "OO" are registered for different public images.

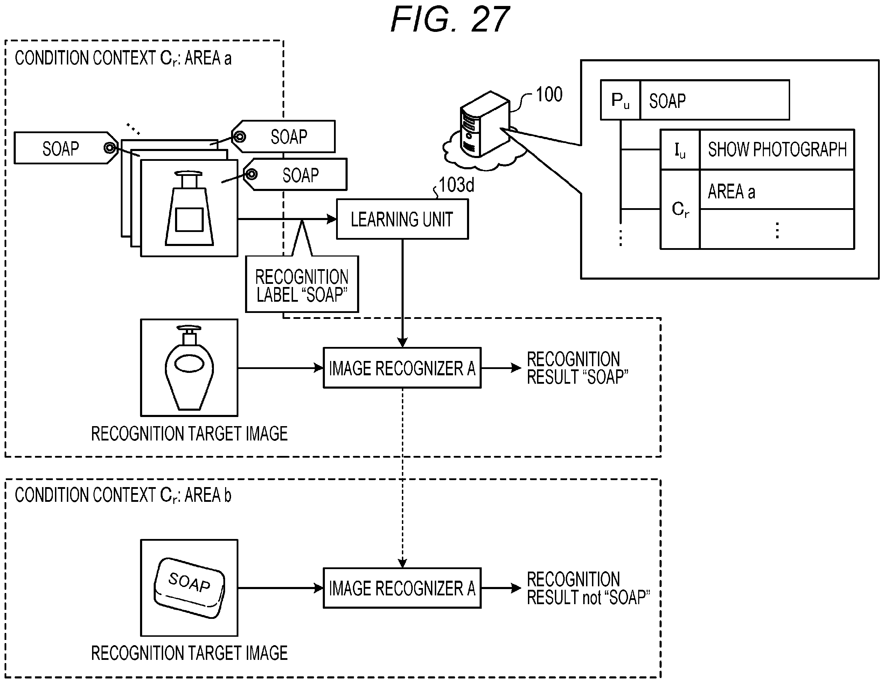

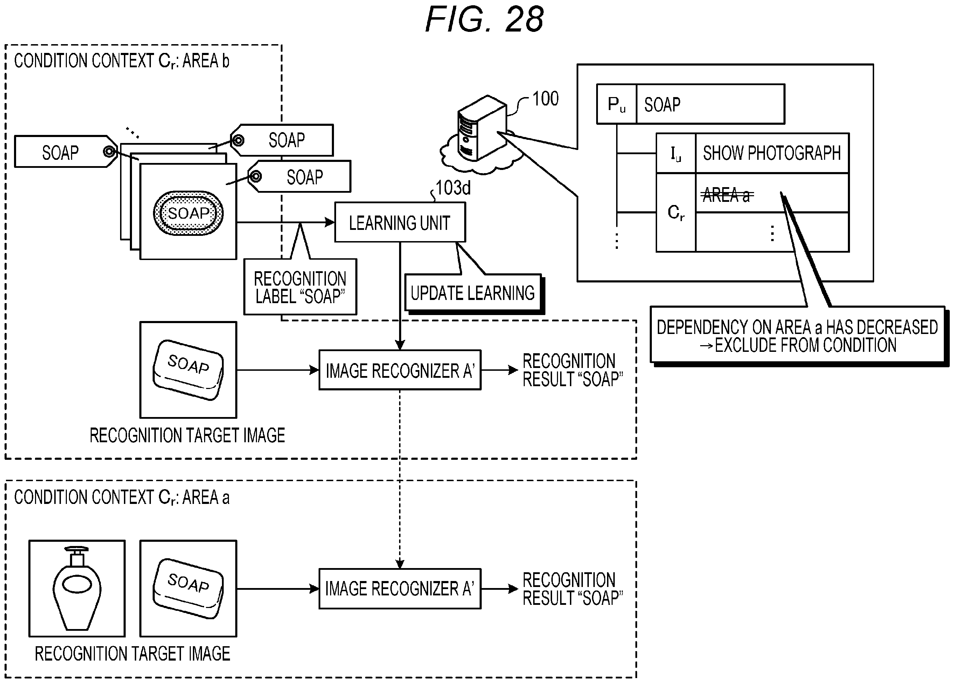

In such a case, the server apparatus 100 executes machine learning using the unknown word entity Pᵤ "OO" as a recognition label (step S37), and generates and distributes an image recognizer as one of the recognition models 12a (step S38). Steps S37 and S38 will be more specifically described later with reference to Figs. 27 and 28.

As described above, with the processing details described with reference to Figs. 20 and 21, it is possible to dynamically associate a real target with the unknown word entity Pᵤ for the user U even in the case of the system-directed speech.

Note that, in Figs. 20 and 21, the condition context Cᵣ is the URL of the site that is being viewed by the user U, but the present disclosure is not limited thereto, and for example, a captured image of the attendance O or the like may be the condition context Cᵣ. Therefore, for example, it is possible to view content or the like in which the condition context Cᵣ is that a specific member such as a family is present.

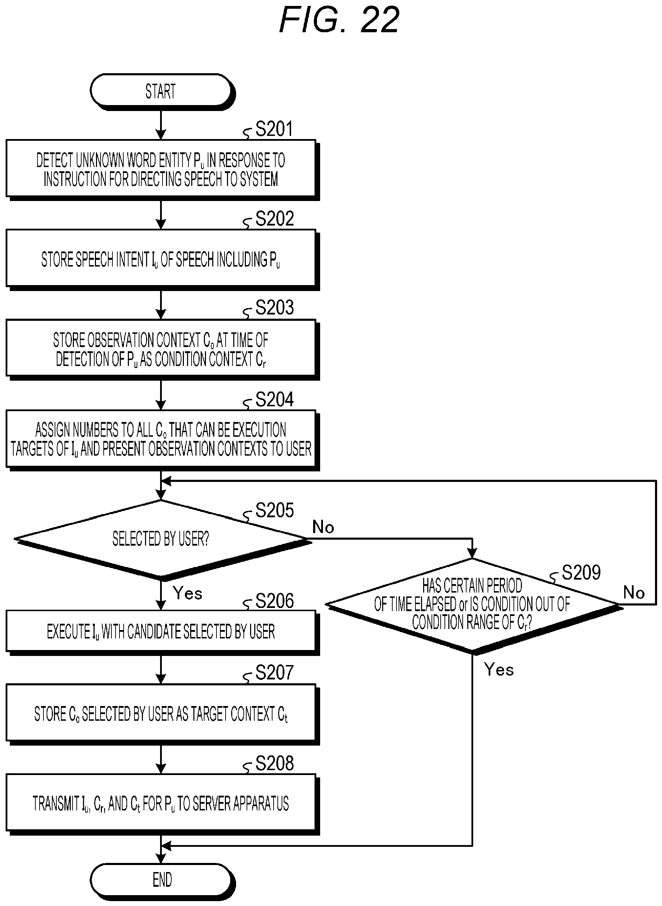

Next, a processing procedure in the case of system-directed speech executed by the information processing apparatus 10 according to the embodiment will be described with reference to Fig. 22. Fig. 22 is a flowchart illustrating a processing procedure in the case of system-directed speech.

As shown in Fig. 22, first, the detection of the unknown word detection unit 13da detects unknown word entity Pᵤ in response to an instruction for directing speech to the system (step S201). Then, the registration unit 13db stores the speech intent Iᵤ of the speech including the unknown word entity Pᵤ in the unknown word information 12b together with the unknown word entity Pᵤ (step S202).

Furthermore, the registration unit 13db stores the observation context Cₒ at the time of detection of the unknown word entity Pᵤ as the condition context Cᵣ in the unknown word information 12b (step S203).

Subsequently, the execution interaction control unit 13d assigns numbers to all the observation contexts Cₒ that can be execution targets of the speech intent Iᵤ and presents the observation contexts Cₒ to the user (step S204). Then, the execution detection unit 13dc detects that the user has selected one of the observation contexts Cₒ (step S205).

Here, in a case where the user selects one of the observation contexts Cₒ (step S205, Yes), the instruction unit 13de executes the speech intent Iᵤ with the candidate selected by the user (step S206). Then, the association unit 13dd stores the observation context Cₒ selected by the user as the target context Ct in the unknown word information 12b (step S207).

Then, the transmission unit 13g transmits the unknown word information 12b, that is, the speech intent Iᵤ, the condition context Cᵣ, and the target context Ct for the unknown word entity Pᵤ to the server apparatus 100 (step S208), and ends the process.

Note that, in a case where the user does not select a context (step S205, No), it is determined whether a certain period of time has elapsed or the condition is out of the condition range of the condition context Cᵣ (step S209). Examples of the condition out of the condition range of the condition context Cᵣ include a case where the user moves from a site to be viewed.

Here, in a case where it is determined that the certain period of time has not elapsed and the condition is within the condition range of the condition context Cᵣ (step S209, No), the process from step S205 is repeatedly performed. On the other hand, in a case where it is determined that the certain period of time has elapsed or the condition is out of the condition range of the condition context Cᵣ (step S209, Yes), the process is ended.

### <2-6. Configuration of server apparatus>

Next, a configuration example of the server apparatus 100 will be described. Fig. 23 is a block diagram illustrating a configuration example of the server apparatus 100 according to the embodiment of the present disclosure.

As illustrated in Fig. 23, the server apparatus 100 includes a communication unit 101, a storage unit 102, and a control unit 103. The communication unit 101 is realized by, for example, an NIC or the like. The communication unit 101 is connected to each of the information processing apparatuses 10 via the network N in a wireless or wired manner, and transmits and receives information to and from the information processing apparatus 10.

Similarly to the storage unit 12 described above, the storage unit 102 is realized by, for example, a semiconductor memory element such as a RAM, a ROM, or a flash memory, or a storage device such as a hard disk or an optical disc. In the example illustrated in Fig. 23, the storage unit 102 stores an unknown word information database (DB) 102a, statistical information 102b, and a recognition model DB 102c.

The unknown word information DB 102a is a database that accumulates the unknown word information 12b collected from each information processing apparatus 10 by a collecting unit 103a that will be described later. The statistical information 102b is information regarding a statistical result of statistical processing executed by a statistical processing unit 103b that will be described later.

The recognition model DB 102c is a database of the recognition model 12a generated by a learning unit 103d that will be described later and distributed to each information processing apparatus 10.

Similarly to the control unit 13 described above, the control unit 103 is a controller, and is realized by, for example, a CPU, an MPU, or the like executing various programs stored in the storage unit 102 by using a RAM as a work area. Furthermore, similarly to the control unit 13 described above, the control unit 103 can be realized by, for example, an integrated circuit such as an ASIC or an FPGA.

The control unit 103 includes a collecting unit 103a, a statistical processing unit 103b, a determination unit 103c, a learning unit 103d, and a distribution unit 103e, and realizes or executes a function or an action of information processing described below.

The collecting unit 103a collects the unknown word information 12b from each information processing apparatus 10 via the communication unit 101, and accumulates the unknown word information 12b in the unknown word information DB 102a. The statistical processing unit 103b executes predetermined statistical processing on the basis of the unknown word information 12b accumulated in the unknown word information DB 102a, and outputs a statistical result as the statistical information 102b.

The determination unit 103c determines an application range of the unknown word information 12b on the basis of the statistical information 102b. Furthermore, the determination unit 103c determines whether it is necessary to update the recognition model 12a (for example, the image recognizer described above) on the basis of the statistical information 102b.

In a case where the determination unit 103c determines that it is necessary to update the recognition model 12a, the learning unit 103d executes a learning process using a predetermined machine learning algorithm on the basis of the unknown word information 12b accumulated in the unknown word information DB 102a, and updates the recognition model 12a that is an update target in the recognition model DB 102c.

The distribution unit 103e distributes the unknown word information 12b that is a distribution target in the unknown word information DB 102a to each information processing apparatus 10 via the communication unit 101 on the basis of the determination result from the determination unit 103c. Furthermore, the distribution unit 103e distributes the recognition model 12a that is the distribution target in the recognition model DB 102c and is updated by the learning unit 103d to each information processing apparatus 10 via the communication unit 101.

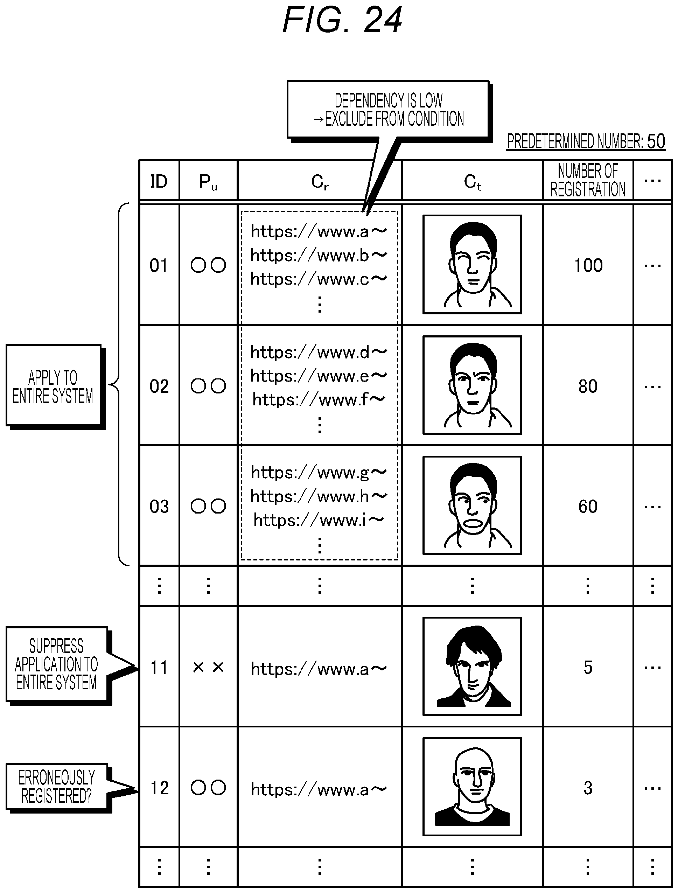

Next, a determination process executed by the determination unit 103c will be described with reference to Fig. 24. Fig. 24 is an explanatory diagram of a determination process executed by the determination unit 103c. Note that Fig. 24 also illustrates an example of the statistical information 102b. Furthermore, in the following description, a case where the selected image is associated with the unknown word entity Pᵤ as the target context Ct, which has been described in the case of a "system-directed speech", will be described as an example.

As illustrated in Fig. 24, the statistical information 102b includes, for example, an "ID" item, a "Pᵤ" item, a "Cᵣ" item, a "Ct" item, and a "number of registrations" item. An identifier of each association result is stored in the "ID" item. The unknown word entity Pᵤ is stored in the "Pᵤ" item. The condition context Cᵣ is stored in the "Cᵣ" item. The target context Ct is stored in the "Ct" item.

An aggregation result of the number of respective association results registered within a certain period in the past is stored in the "number of registrations" item. The number of registrations may be paraphrased as the usage number. Note that the "predetermined number" in the figure is a specified number of the number of registrations. In a case where the number of registrations is equal to or larger than the predetermined number, the determination unit 103c applies the corresponding association result to the entire system. In Fig. 24, the predetermined number is set to "50" as an example.

Then, in the case of the example in Fig. 24, the determination unit 103c determines to apply the association results of the IDs "01" to "03" in which the number of registrations within a certain period in the past is equal to or larger than the predetermined number to the entire system.

Furthermore, in a case where the association result has high dependency on the specific condition context Cᵣ, the determination unit 103c determines to apply the association result without excluding the condition context Cᵣ. On the other hand, in a case where the association result has low dependency on the specific condition context Cᵣ, the determination unit 103c determines not to apply the association result to the condition context Cᵣ.

In the case of the example in Fig. 24, in the association results of the IDs "01" to "03", the condition contexts Cᵣ are diverse. Therefore, it can be said that the dependency on the condition context Cᵣ is low, and the determination unit 103c excludes the condition context Cᵣ from the condition in such a case.

Furthermore, the determination unit 103c determines to suppress the application of the association result of the ID "11" in which the number of registrations within a certain period in the past is smaller than the predetermined number to the entire system.

Note that, here, as illustrated in "erroneous registration?" in the figure, for the association result of the ID "12", the unknown word entity Pᵤ that is same as that of the IDs" 01" to "03" is registered, but an image of a different person is associated as the target context Ct.

As the erroneous registration, a case where a person makes a mistake without maliciousness, a case where a malicious person intentionally makes a mistake, and the like are conceivable. However, the determination unit 103c suppresses the application to the entire system in a case where the number of registrations within a certain period in the past is smaller than a predetermined number, and thus, it can be said that even if the malicious person makes a mistake, an association result is hardly applied to the entire system.

Note that, in an initial transient state in which the number of associations of the unknown word entity Pᵤ with the specific image is small, for example, by storing or discarding the association through an interaction with the user U on the information processing apparatus 10 side, it is possible to reduce erroneous association.

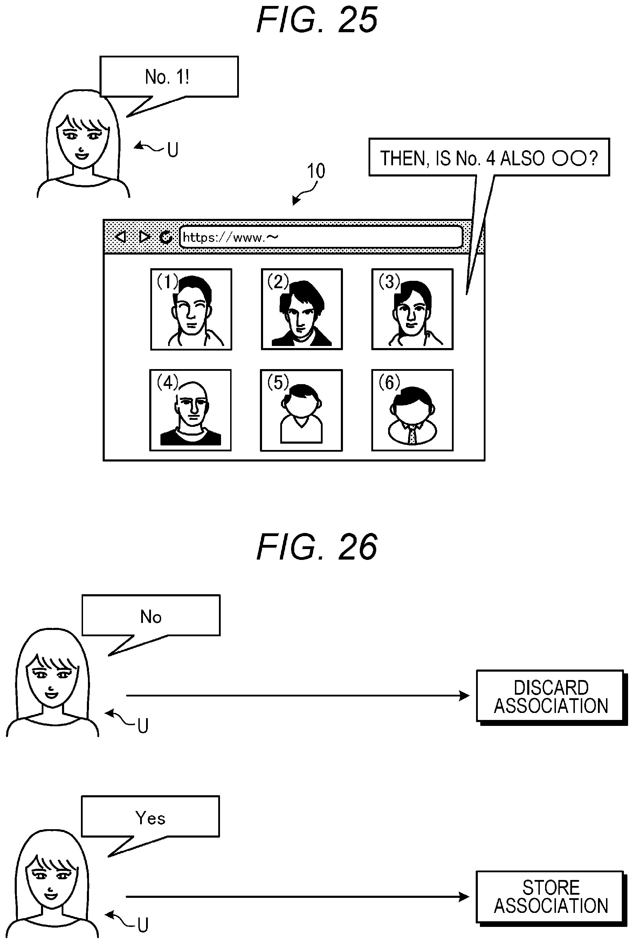

A modification example thereof will be described with reference to Figs. 25 and 26. Fig. 25 is a diagram (part 1) illustrating an interaction processing example of storing or discarding association. Furthermore, Fig. 26 is a diagram (part 2) illustrating an interaction processing example of storing or discarding association.

Note that Fig. 25 corresponds to the continuation of Fig. 20 already described. Furthermore, although the correct image to be associated with the unknown word entity Pᵤ "OO" is the image of No. 1, for example, it is assumed that a small number (smaller than the predetermined number described above) of pieces of data is associated with an image of No. 4 with maliciousness.

In such a case, as illustrated in Fig. 25, in a case where the user U selects the image of No. 1 in response to an inquiry to prompt selection of an image to be associated with the unknown word entity Pᵤ "OO", the information processing apparatus 10 makes an inquiry of "Then, is No. 4 also OO?" to the user U, for example.

Here, since the user U selects the correct image in Fig. 25, it can be estimated that the user U is not at least a malicious person. Therefore, as illustrated in Fig. 26, in a case where the user U has expressed an intention of "No" in response to the inquiry in Fig. 25, the information processing apparatus 10 discards the association between the unknown word entity Pᵤ "OO" and the image of No. 4.

Furthermore, in a case where the user U has expressed an intention of "Yes", the information processing apparatus 10 stores the association between the unknown word entity Pᵤ "OO" and the image of No. 4. Therefore, for example, it is possible to reduce erroneous association performed by a malicious person.

### <2-7. Application example of automatic update using area of image recognizer>

Next, steps S37 and S38 described with reference to Fig. 21 will be described more specifically with reference to Figs. 27 and 28. That is, the unknown word information 12b that is an association result is transmitted to the server apparatus 100, and as a result of the statistical processing performed in the server apparatus 100, a predetermined number or more of specific unknown word entities Pᵤ are associated with different public images.

In such a case, as described above, the server apparatus 100 executes machine learning using the corresponding unknown word entity Pᵤ as a recognition label, and generates and distributes an image recognizer as one of the recognition models 12a.

Fig. 27 is a diagram (part 1) illustrating an application example of automatic update using an area of the image recognizer. Furthermore, Fig. 28 is a diagram (part 2) illustrating an application example of automatic update using the area of the image recognizer.

Note that, in the description using Figs. 27 and 28, different areas a and b will be described as an example. The area a is, for example, an area where a penetration rate of a liquid soap is high. On the other hand, the area b is, for example, an area where a penetration rate of a solid soap is high.

Then, here, it is assumed that a predetermined number or more of public different images with which the phrase "soap" is tagged (associated) exist, and machine learning using the phrase "soap" as a recognition label is performed.

In such a case, as shown in Fig. 27, first, in the area a, the phrase "soap" is more likely to be tagged with different public images of the liquid soap. Note that it is assumed that the condition context Cᵣ of each image includes the area a.

Then, in a case where a predetermined number or more of images of the liquid soap tagged with the phrase "soap" are collected, the learning unit 103d of the server apparatus 100 executes machine learning using "soap" as a recognition label, and generates an image recognizer A. The server apparatus 100 distributes the image recognizer to each information processing apparatus 10 in the area a, and in the information processing apparatus 10 in the area a, in a case where an image of the liquid soap is input to the image recognizer A as a recognition target image, a recognition result of "soap" is obtained.

However, the image recognizer A is generated through machine learning executed using the image of the liquid soap as training data. Therefore, even if the image recognizer A is distributed to each information processing apparatus 10 in the area b, and an image of the solid soap is input as a recognition target image to the image recognizer A, it is not possible to obtain the recognition result of "soap".

Therefore, if, for example, the "area a" is associated with the phrase "soap" as the condition context Cᵣ in the corresponding unknown word information 12b of the unknown word information DB 102a, the server apparatus 100 sets a distribution target of the image recognizer A to only the area a.

On the other hand, as shown in Fig. 28, in the area b, the phrase "soap" is more likely to be tagged with different public images of the solid soap. Therefore, in a case where a predetermined number or more of images of the solid soap tagged with the phrase "soap" are collected, the learning unit 103d of the server apparatus 100 executes machine learning using "soap" as a recognition label. However, if the image recognizer A (refer to Fig. 27) having the same phrase "soap" as a recognition label already exists, the learning unit 103d executes update learning and outputs an image recognizer A' .

Then, the server apparatus 100 distributes the image recognizer to each information processing apparatus 10 in the area b, and in the information processing apparatus 10 in the area b, when an image of solid soap is input to the image recognizer A' as a recognition target image, a recognition result of "soap" is obtained.

Furthermore, the server apparatus 100 may determine that the dependency on the "area a" associated with the phrase "soap" in the unknown word information 12b hitherto as the condition context Cᵣ has decreased by executing the update learning on the basis of the image of the solid soap in the area b. Then, in this case, the server apparatus 100 excludes the "area a" from the condition.

Furthermore, if the "area a" is excluded from the condition context Cᵣ as described above, the server apparatus 100 may set a distribution target of the image recognizer A' to not only the area b but also, for example, all areas. Then, in a case where the server apparatus 100 distributes the image recognizer A' to, for example, the area a, and the information processing apparatus 10 in the area a inputs an image of the liquid soap or the solid soap to the image recognizer A as a recognition target image, a recognition result of "soap" can be obtained in either case.

As described above, in a case where the dependency of the unknown word information 12b on the specific condition context Cᵣ decreases as opportunity learning is repeated, the trend following performance of the recognition model 12a can be improved by excluding the corresponding condition context Cᵣ from the condition and changing a distribution target of the recognition model 12a including the image recognizer according thereto.

### <<3. Modification examples>>

Note that, although the information processing method according to the embodiment for acquiring a real target of an unknown word has been described so far, various modification examples can be made in addition to the description.

### <3-1. Modification example in case of human-directed speech>

For example, acquisition of a real target of the unknown word entity Pᵤ in the case of human-directed speech can also be applied to viewing of a television program or video content by a family or the like. At the time of such viewing, for example, it is assumed that a child or an elderly person says "I want to watch XX (appears)". "XX" is a naming for an animation character or a performer.

In this case, the information processing apparatus 10 realized by, for example, a television set, a PC, or the like detects the unknown word entity Pᵤ "XX", and associates the attendance O at the place, a time zone, or the like as the condition context Cᵣ with the unknown word entity Pᵤ" XX". Then, in a case where a program is actually selected or video content is reproduced, the information processing apparatus 10 further associates the selected program or the reproduced video content as the target context Ct.

Therefore, thereafter, in a case where there is speech of "I want to watch XX" from the same attendance O or in the same time zone, the information processing apparatus 10 can interpret the unknown word entity Pᵤ "XX" as the program or the video content.

Furthermore, as another modification example, a scene in which a plurality of persons searches for a restaurant or the like may be exemplified. In such a case, for example, the information processing apparatus 10 realized by a smartphone or the like may set a context of a conversation between persons immediately before, the persons at the place, the place, and the like as the condition context Cᵣ.

As an example, it is assumed that one of members who are going to have a meal together in Shinagawa says "is there something delicious around here?". Then, the information processing apparatus 10 detects the unknown word entity Pᵤ "something delicious", and associates the unknown word entity Pᵤ "something delicious" with, for example, the attendance O, Shinagawa, or the like as the condition context Cᵣ.

Then, for example, in a case where another one of the members replies "let's go to the ΔΔ store" to the previous speech, the information processing apparatus 10 further associates the "ΔΔ store" as the target context Ct.

Therefore, thereafter, in a case where the same member in Shinagawa says "something delicious", the information processing apparatus 10 can interpret the unknown word entity Pᵤ "something delicious" as the "ΔΔ store", and can present the unknown word entity Pᵤ as a first candidate in a restaurant search, for example.

### <3-2. Modification example in case of system-directed speech>

Furthermore, for example, the acquisition of a real target of the unknown word entity Pᵤ in the case of system-directed speech is not limited to the image search illustrated in Figs. 19 to 21, and can be applied to various content searches.

In such a case, as illustrated in Fig. 20, the content selected by the user U from among a plurality of presented candidates is associated as the target context Ct.

Furthermore, as another modification example, for example, a known phrase based on text selected by the user U may be associated with the unknown word entity Pᵤ as the target context Ct. In such a case, in a case where the unknown word entity Pᵤ is detected, the information processing apparatus 10 can interpret the unknown word entity Pᵤ with a known phrase that is a synonym.

Furthermore, as still another modification example, a case where the intent described with reference to Fig. 18 is an unknown word may also be applied to the case of system-directed speech.

Even in the case of the system-directed speech, the information processing apparatus 10 associates the speech entity Eᵤ, the condition context Cᵣ, and the execution function with the detected unknown word intent IPᵤ. Note that, in the case of the system-directed speech, similarly to the example illustrated in Fig. 20, the information processing apparatus 10 presents candidates of functions that can be executed by the system for the speech entity Eᵤ, and makes an inquiry to prompt the user U to select a function to be executed.

Then, if the user U selects the function to be executed in response to the inquiry, the information processing apparatus 10 associates the observation context Cₒ, that is, the selected execution function with the unknown word intent IPᵤ as the target context Ct. Therefore, the information processing apparatus 10 can dynamically acquire the execution function of the unknown word intent IPᵤ even in the case of the system-directed speech.

### <3-3. Other modification examples>

Furthermore, in the above-described embodiment, the case where an unknown word is detected from text input in a spoken language has been described, but the present disclosure is not limited thereto, and the unknown word is only required to be input in a natural language. Therefore, for example, an unknown word may be detected from a message of a message application. In addition, for example, an unknown word may be detected from an article published on a Web.

Furthermore, among the processes described in the above embodiments, all or some of the processes described as being performed automatically may be performed manually, or all or some of the processes described as being performed manually may be performed automatically according to a known method. In addition, the processing procedure, specific name, and information including various types of data or parameters described in the above specification and the drawings may be freely changed unless otherwise specified. For example, the various types of information illustrated in each drawing are not limited to the illustrated information.

Furthermore, a constituent of each device illustrated in the drawings is functionally conceptual, and is not necessarily physically configured as illustrated in the drawings. That is, a specific form of distribution and integration of the respective devices is not limited to the illustrated form, and all or some thereof can be functionally or physically distributed and integrated in any unit according to various loads, usage conditions, or the like. For example, the unknown word detection unit 13da and the execution detection unit 13dc illustrated in Fig. 7 may be integrated. Furthermore, the registration unit 13db and the association unit 13dd illustrated in the same Fig. 7 may be integrated.

Furthermore, each function executed by the control unit 13 of the information processing apparatus 10 illustrated in Fig. 7 may be executed by the server apparatus 100. In such a case, the information processing apparatus 10 used by the user U includes the voice input unit 2, the sensor unit 3, the display unit 4, the voice output unit 5, and the communication unit 11, transmits and receives information to and from the server apparatus 100 via the network N, and functions as a so-called voice UI device that presents an execution result of each function in the server apparatus 100 to the user U through interaction with the user U.

Furthermore, the above-described embodiments can be combined as appropriate in a region in which the processing details do not contradict each other. Furthermore, the order of each step illustrated in the sequence diagram or the flowchart of the present embodiment can be changed as appropriate.

### <<4. Hardware configuration>>

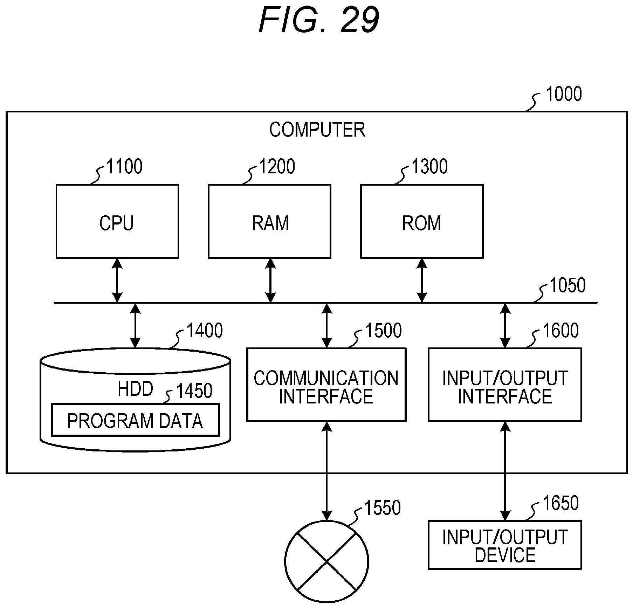

An information apparatus such as the information processing apparatus 10 and the server apparatus 100 according to the above-described embodiment is implemented by a computer 1000 having a configuration as illustrated in Fig. 29, for example. Hereinafter, the information processing apparatus 10 according to the embodiment will be described as an example. Fig. 29 is a hardware configuration diagram illustrating an example of the computer 1000 that realizes the functions of the information processing apparatus 10. The computer 1000 includes a CPU 1100, a RAM 1200, a ROM 1300, a hard disk drive (HDD) 1400, a communication interface 1500, and an input/output interface 1600. The respective units of the computer 1000 are connected via a bus 1050.

The CPU 1100 operates on the basis of a program stored in the ROM 1300 or the HDD 1400, and controls each unit. For example, the CPU 1100 loads a program stored in the ROM 1300 or the HDD 1400 to the RAM 1200, and executes processes corresponding to various programs.

The ROM 1300 stores a boot program such as a basic input output system (BIOS) executed by the CPU 1100 when the computer 1000 is started, a program depending on hardware of the computer 1000, and the like.

The HDD 1400 is a computer-readable recording medium that records a program executed by the CPU 1100, data used by the program, and the like in a non-transitory manner. Specifically, the HDD 1400 is a recording medium that records an information processing program according to the present disclosure as an example of the program data 1450.

The communication interface 1500 is an interface via which the computer 1000 is connected to an external network 1550 (for example, the Internet). For example, the CPU 1100 receives data from another apparatus or transmits data generated by the CPU 1100 to another apparatus via the communication interface 1500.

The input/output interface 1600 is an interface connecting the input/output device 1650 to the computer 1000. For example, the CPU 1100 receives data from an input device such as a keyboard or a mouse via the input/output interface 1600. Furthermore, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing apparatus 10 according to the embodiment, the CPU 1100 of the computer 1000 executes the information processing program loaded to the RAM 1200 to realize the functions of the voice recognition unit 13a, the semantic understanding unit 13b, the context recognition unit 13c, the execution interaction control unit 13d, the response generation unit 13e, the output control unit 13f, the transmission unit 13g, and the like. Furthermore, the HDD 1400 stores the information processing program according to the present disclosure and data in the storage unit 12. Note that the CPU 1100 reads the program data 1450 from the HDD 1400 and executes the program data, but as another example, the program may be acquired from another device via the external network 1550.

### <<5. Conclusion>>

As described above, according to an embodiment of the present disclosure, the information processing apparatus 10 includes: the unknown word detection unit 13da (corresponding to an example of a "first detection unit") that detects an unknown word that is an unknown phrase from text input in a natural language; the execution detection unit 13dc (corresponding to an example of a "second detection unit") that detects the occurrence of an event related to a known phrase included in the text; and the association unit 13dd that associates, with the unknown word, each of the observation context Cₒ indicating a situation at the time of detection of the unknown word as the condition context Cᵣ and the observation context Cₒ indicating a situation at the time of the occurrence of the event as the target context Ct. Therefore, an unknown word can be efficiently associated with a real target without imposing a load on a user.

Although the respective embodiments of the present disclosure have been described above, the technical scope of the present disclosure is not limited to the above-described embodiments as it is, and various modifications can be made without departing from the concept of the present disclosure. Furthermore, constituents of different embodiments and modification examples may be combined as appropriate.

Furthermore, the effects of each embodiment described in the present specification are merely examples and are not limited, and other effects may be provided.

Note that the present technology can also have the following configurations.
(1) An information processing apparatus including:
   a first detection unit that detects an unknown word that is an unknown phrase from text input in a natural language;
   a second detection unit that detects occurrence of an event related to a known phrase included in the text; and
   an association unit that associates, with the unknown word, each of an observation context indicating a situation at the time of detection of the unknown word as a condition context and an observation context indicating a situation at the time of the occurrence of the event as a target context.
(2) The information processing apparatus according to (1), in which
   the first detection unit
   detects, as the unknown word, a phrase that does not exist in dictionary information used in an NLU process for the text, or a phrase that exists in the dictionary information but does not uniquely specify a real target corresponding to the phrase in information processing based on the text.
(3) The information processing apparatus according to (1) or (2), in which
   the first detection unit
   detects the unknown word from the text input through a conversation of a user.
(4) The information processing apparatus according to (1), (2), or (3), in which
   the first detection unit
   detects the unknown word from the text input as a speech instruction from a user.
(5) The information processing apparatus according to (2), in which
   the second detection unit
   detects execution of an intent extracted through the NLU process in a case where the unknown word detected by the first detection unit is a phrase extracted as an entity through the NLU process, and
   the association unit
   associates an observation context at the time of detection of the unknown word with the unknown word as the condition context, and associates an observation context at the time of execution of the intent with the unknown word as the target context.
(6) The information processing apparatus according to (5), in which
   in a case where a movement situation is observed, the association unit
   associates position information indicating a predetermined range including a current position at the time of detection of the unknown word with the unknown word as the condition context, and associates an observation context indicating a current position at the time of execution of the intent with the unknown word as the target context.
(7) The information processing apparatus according to (5) or (6), in which
   the association unit associates an observation context indicating a time zone at the time of detection of the unknown word with the unknown word as the condition context.
(8) The information processing apparatus according to (5), (6), or (7), in which
   in a case where a movement situation is observed and an attribute of presence of directivity is extracted from the unknown word through the NLU process, the association unit
   associates an observation context indicating an advancing direction range within a predetermined angle from an advancing direction at the time of detection of the unknown word with the unknown word as the condition context.
(9) The information processing apparatus according to any one of (5) to (8), in which
   the association unit
   associates a captured image at the time of detection of the unknown word with the unknown word as the condition context, and associates a captured image at the time of execution of the intent with the unknown word as the target context.
(10) The information processing apparatus according to (2), in which
   in a case where the unknown word detected by the first detection unit is a phrase extracted as an entity through the NLU process, the second detection unit
   presents all candidates that can be execution targets of an intent extracted through the NLU process to a user and detects that the user has selected one of the candidates, and
   the association unit
   associates an observation context at the time of detection of the unknown word with the unknown word as the condition context, and associates the candidate selected by the user with the unknown word as the target context.
(11) The information processing apparatus according to (2), in which
   in a case where the unknown word detected by the first detection unit is a phrase extracted as an intent through the NLU process, the second detection unit
   detects execution of a function for an entity extracted through the NLU process, and
   the association unit
   associates an observation context at the time of detection of the unknown word with the unknown word as the condition context, and associates the function with the unknown word as the target context.
(12) The information processing apparatus according to any one of (1) to (11), further including:
   a transmission unit that transmits an association result from the association unit to a server apparatus, in which
   in a case where it is determined that a predetermined number or more of the unknown words have not been used in the same condition context and the same target context as the association result within a past certain period on the basis of a statistical result of the association result, the server apparatus
   suppresses distribution of the association result.
(13) The information processing apparatus according to (12), in which
   in a case where it is determined that dependency of the unknown word on a specific condition context has decreased on the basis of the statistical result of the association result, the server apparatus
   cancels association of the specific condition context with the unknown word.
(14) An information processing apparatus including:
   a first detection unit that detects an unknown word that is an unknown phrase from text input in a natural language;
   a second detection unit that detects occurrence of an event related to a known phrase included in the text;
   an association unit that associates, with the unknown word, each of an observation context indicating a situation at the time of detection of the unknown word as a condition context and an observation context indicating a situation at the time of the occurrence of the event as a target context; and
   an instruction unit that, in a case where the known phrase is included in new text and the condition context associated with the unknown word is observed, gives an instruction for generating a response using the unknown word.
(15) The information processing apparatus according to (14), in which
   in a case where the response using the unknown word is generated, the instruction unit
   causes an image representing the condition context associated with the unknown word and an image representing the target context associated with the unknown word to be generated such that a user can visually recognize the images.
(16) An information processing method including:
   detecting an unknown word that is an unknown phrase from text input in a natural language;
   detecting occurrence of an event related to a known phrase included in the text; and
   associating, with the unknown word, each of an observation context indicating a situation at the time of detection of the unknown word as a condition context and an observation context indicating a situation at the time of the occurrence of the event as a target context.
(17) An information processing method including:
   detecting an unknown word that is an unknown phrase from text input in a natural language;
   detecting occurrence of an event related to a known phrase included in the text;
   associating, with the unknown word, each of an observation context indicating a situation at the time of detection of the unknown word as a condition context and an observation context indicating a situation at the time of the occurrence of the event as a target context; and
   in a case where the known phrase is included in new text and the condition context associated with the unknown word is observed, giving an instruction for generating a response using the unknown word.
(18) An information processing apparatus including:
   an instruction unit that gives an instruction for generating a response according to a phrase on the basis of the phrase included in text input in a natural language, in which
   the instruction unit gives an instruction for generating a response using an unknown word on the basis of a condition context that is associated with the unknown word that is an unknown phrase detected from the text and is an observation context indicating a situation at the time of detection of the unknown word and a target context that is an observation context indicating a situation at the time of occurrence of an event related to a known phrase included in the text in a case where the known phrase is included in new text and the condition context associated with the unknown word is observed.
(19) An information processing method including:
   giving an instruction for generating a response according to a phrase on the basis of the phrase included in text input in a natural language, in which
   the giving an instruction includes giving an instruction for generating a response using an unknown word on the basis of a condition context that is associated with the unknown word that is an unknown phrase detected from the text and is an observation context indicating a situation at the time of detection of the unknown word and a target context that is an observation context indicating a situation at the time of occurrence of an event related to a known phrase included in the text in a case where the known phrase is included in new text and the condition context associated with the unknown word is observed.
(20) A non-transitory computer readable recording medium storing a program causing a computer to execute:
   detecting an unknown word that is an unknown phrase from text input in a natural language;
   detecting occurrence of an event related to a known phrase included in the text; and
   associating, with the unknown word, each of an observation context indicating a situation at the time of detection of the unknown word as a condition context and an observation context indicating a situation at the time of the occurrence of the event as a target context.
(21) A non-transitory computer readable recording medium storing a program causing a computer to execute:
   detecting an unknown word that is an unknown phrase from text input in a natural language;
   detecting occurrence of an event related to a known phrase included in the text;
   associating, with the unknown word, each of an observation context indicating a situation at the time of detection of the unknown word as a condition context and an observation context indicating a situation at the time of the occurrence of the event as a target context; and
   in a case where the known phrase is included in new text and the condition context associated with the unknown word is observed, giving an instruction for generating a response using the unknown word.

### REFERENCE SIGNS LIST

- 1: Information processing system
- 10: Information processing apparatus
- 11: Communication unit
- 12: Storage unit
- 12a: Recognition model
- 12b: Unknown word information
- 13: Control unit
- 13a: Voice recognition unit
- 13b: Semantic understanding unit
- 13c: Context recognition unit
- 13d: Execution interaction control unit
- 13da: Unknown word detection unit
- 13db: Registration unit
- 13dc: Execution detection unit
- 13dd: Association unit
- 13de: Instruction unit
- 13e: Response generation unit
- 13f: Output control unit
- 13g: Transmission unit
- 100: Server apparatus
- 101: Communication unit
- 102: Storage unit
- 102a: Unknown word information DB
- 102b: Statistical information
- 102c: Recognition model DB
- 103: Control unit
- 103a: Collecting unit
- 103b: Statistical processing unit
- 103c: Determination unit
- 103d: Learning unit
- 103e: Distribution unit

## Claims

1. An information processing apparatus comprising:
a first detection unit that detects an unknown word that is an unknown phrase from text input in a natural language;
a second detection unit that detects occurrence of an event related to a known phrase included in the text; and
an association unit that associates, with the unknown word, each of an observation context indicating a situation at the time of detection of the unknown word as a condition context and an observation context indicating a situation at the time of the occurrence of the event as a target context.

2. The information processing apparatus according to claim 1, wherein
the first detection unit
detects, as the unknown word, a phrase that does not exist in dictionary information used in a natural language understanding (NLU) process for the text, or a phrase that exists in the dictionary information but does not uniquely specify a real target corresponding to the phrase in information processing based on the text.

3. The information processing apparatus according to claim 1, wherein
the first detection unit
detects the unknown word from the text input through a conversation of a user.

4. The information processing apparatus according to claim 1, wherein
the first detection unit
detects the unknown word from the text input as a speech instruction from a user.

5. The information processing apparatus according to claim 2, wherein
the second detection unit
detects execution of an intent extracted through the NLU process in a case where the unknown word detected by the first detection unit is a phrase extracted as an entity through the NLU process, and
the association unit
associates an observation context at the time of detection of the unknown word with the unknown word as the condition context, and associates an observation context at the time of execution of the intent with the unknown word as the target context.

6. The information processing apparatus according to claim 5, wherein
in a case where a movement situation is observed, the association unit
associates position information indicating a predetermined range including a current position at the time of detection of the unknown word with the unknown word as the condition context, and associates an observation context indicating a current position at the time of execution of the intent with the unknown word as the target context.

7. The information processing apparatus according to claim 5, wherein
the association unit
associates an observation context indicating a time zone at the time of detection of the unknown word with the unknown word as the condition context.

8. The information processing apparatus according to claim 5, wherein
in a case where a movement situation is observed and an attribute of presence of directivity is extracted from the unknown word through the NLU process, the association unit
associates an observation context indicating an advancing direction range within a predetermined angle from an advancing direction at the time of detection of the unknown word with the unknown word as the condition context.

9. The information processing apparatus according to claim 5, wherein
the association unit
associates a captured image at the time of detection of the unknown word with the unknown word as the condition context, and associates a captured image at the time of execution of the intent with the unknown word as the target context.

10. The information processing apparatus according to claim 2, wherein
in a case where the unknown word detected by the first detection unit is a phrase extracted as an entity through the NLU process, the second detection unit
presents all candidates that can be execution targets of an intent extracted through the NLU process to a user and detects that the user has selected one of the candidates, and
the association unit
associates an observation context at the time of detection of the unknown word with the unknown word as the condition context, and associates the candidate selected by the user with the unknown word as the target context.

11. The information processing apparatus according to claim 2, wherein
in a case where the unknown word detected by the first detection unit is a phrase extracted as an intent through the NLU process, the second detection unit
detects execution of a function for an entity extracted through the NLU process, and
the association unit
associates an observation context at the time of detection of the unknown word with the unknown word as the condition context, and associates the function with the unknown word as the target context.

12. The information processing apparatus according to claim 1, further comprising:
a transmission unit that transmits an association result from the association unit to a server apparatus, wherein
in a case where it is determined that a predetermined number or more of the unknown words have not been used in the same condition context and the same target context as the association result within a past certain period on a basis of a statistical result of the association result, the server apparatus
suppresses distribution of the association result.

13. The information processing apparatus according to claim 12, wherein
in a case where it is determined that dependency of the unknown word on a specific condition context has decreased on a basis of the statistical result of the association result, the server apparatus
cancels association of the specific condition context with the unknown word.

14. An information processing apparatus comprising:
a first detection unit that detects an unknown word that is an unknown phrase from text input in a natural language;
a second detection unit that detects occurrence of an event related to a known phrase included in the text;
an association unit that associates, with the unknown word, each of an observation context indicating a situation at the time of detection of the unknown word as a condition context and an observation context indicating a situation at the time of the occurrence of the event as a target context; and
an instruction unit that, in a case where the known phrase is included in new text and the condition context associated with the unknown word is observed, gives an instruction for generating a response using the unknown word.

15. The information processing apparatus according to claim 14, wherein
in a case where the response using the unknown word is generated, the instruction unit
causes an image representing the condition context associated with the unknown word and an image representing the target context associated with the unknown word to be generated such that a user can visually recognize the images.

16. An information processing method comprising:
detecting an unknown word that is an unknown phrase from text input in a natural language;
detecting occurrence of an event related to a known phrase included in the text; and
associating, with the unknown word, each of an observation context indicating a situation at the time of detection of the unknown word as a condition context and an observation context indicating a situation at the time of the occurrence of the event as a target context.

17. An information processing method comprising:
detecting an unknown word that is an unknown phrase from text input in a natural language;
detecting occurrence of an event related to a known phrase included in the text;
associating, with the unknown word, each of an observation context indicating a situation at the time of detection of the unknown word as a condition context and an observation context indicating a situation at the time of the occurrence of the event as a target context; and
in a case where the known phrase is included in new text and the condition context associated with the unknown word is observed, giving an instruction for generating a response using the unknown word.
